# EUROPÄISCHE PATENTSCHRIFT

(11) **EP 3 290 262 B1**
(45) Veröffentlichungstag und Bekanntmachung des Hinweises auf die Patenterteilung: **23.09.2020**
(21) Anmeldenummer: 16186227.1
(22) Anmeldetag: 30.08.2016
(51) Int. Cl.: B60N 2/60

(54) **FAHRZEUGSITZ-SCHUTZBEZUG**
VEHICLE SEAT PROTECTIVE COVER
HOUSSE DE SIEGE DE VEHICULE

(43) Veröffentlichungstag der Anmeldung: 07.03.2018
(73) Patentinhaber: Horn & Bauer GmbH & Co. KG, 34613 Schwalmstadt (DE)
(72) Erfinder: Suhr, Bernd, 34281 Gudensberg (DE)
(74) Vertreter: REHBERG HÜPPE + PARTNER

(56) Entgegenhaltungen:
- WO-A1-2013/026074
- US-A1- 2007 040 426

## Beschreibung

### TECHNISCHES GEBIET DER ERFINDUNG

Die Erfindung betrifft einen Fahrzeugsitz-Schutzbezug. Derartige Fahrzeugsitz-Schutzbezüge werden über Fahrzeugsitze gestülpt oder gezogen, um eine Verschmutzung des Fahrzeugsitzes, insbesondere durch Monteure, andere Personen oder Verschmutzungen der Umgebung, zu vermeiden. Fahrzeugsitz-Schutzbezüge werden beispielsweise verwendet in Automobilwerkstätten, wenn an Fahrzeugen eine Inspektion oder Reparatur durchgeführt wird. Darüber hinaus finden Fahrzeugsitz-Schutzbezüge Einsatz zur Vermeidung einer Verschmutzung des Fahrzeugsitzes beim Hersteller des Fahrzeugsitzes, bei der Zulieferung des Fahrzeugsitzes zum Automobilwerk und in dem Automobilwerk selbst, wobei hier auch eine Handhabung des Fahrzeugsitzes durch einen Roboter erfolgen kann und ein Schutzbezug Kontaktflächen zwischen Greif- oder Halteelementen des Roboters und dem Fahrzeugsitz hinsichtlich Verschmutzungen und/oder Beschädigungen schützen kann. Auch während der Montage des Fahrzeugs kommt eine Vielzahl von Monteuren nacheinander mit den Fahrzeugsitzen in Berührung. Schließlich muss das fertig montierte Fahrzeug vom Band gefahren, auf Lastkraftwagen oder Eisenbahnwaggons aufgefahren und letztendlich beim Fahrzeughändler noch mehrmals gehandhabt werden, bis das Fahrzeug in möglichst sauberem Zustand in die Hand des Erwerbers ausgeliefert werden kann. Von der Herstellung des Fahrzeugsitzes beim Zulieferer bis zur Auslieferung des Fahrzeugs an den Erwerber kommt der Fahrzeugsitz unter Umständen 30 bis 35 Mal in Kontakt mit Monteuren oder anderen Personen, so dass eine erhebliche Verschmutzungsgefahr besteht, welche mittels eines Fahrzeugsitz-Schutzbezuges vermieden werden soll.

Die Erfindung betrifft auch ein Verfahren zur Verwendung eines derartigen Fahrzeugsitz-Schutzbezuges im Zusammenhang mit den zuvor genannten Einsatzzwecken. Schließlich betrifft die Erfindung auch eine Fahrzeugsitz-Einheit.

### STAND DER TECHNIK

DE 42 10 232 C2 schlägt eine Fahrzeugsitz-Schutzfolie mit einer oberen Tasche sowie einer unteren Tasche vor. Die obere Tasche kann von oben über eine Rückenlehne (und eine etwaige Kopfstütze der Rückenlehne) des Fahrzeugsitzes gezogen werden, während die untere Tasche von vorne über ein Sitzpolster des Fahrzeugsitzes gezogen werden kann, womit grundsätzlich die Fahrzeugsitz-Schutzfolie an dem Fahrzeugsitz fixiert werden kann. Die Fahrzeugsitz-Schutzfolie besitzt eine Vorderlage mit einer Länge, die größer ist als die Summe der Längen des Sitzpolsters und der Rückenlehne sowie einer etwaigen Kopfstütze des Fahrzeugsitzes, sodass zwischen den Teilbereichen der Vorderlage zur Abdeckung des Sitzpolsters und der Rückenlehne eine Einstecktasche gebildet werden kann. Die Einstecktasche kann in einen Spalt zwischen der Rückenlehne und das Sitzpolster eingeführt werden und dort infolge der Elastizität der Rückenlehne und des Sitzpolsters eingeklemmt werden. Infolge dieser (zusätzlichen) Fixierung der Fahrzeugsitz-Schutzfolie an dem Fahrzeugsitz entfernt sich die Fahrzeugsitz-Schutzfolie bei einem "Überkopf"-Transport des Fahrzeugsitzes nicht zwischen den Taschen von dem Fahrzeugsitz, wodurch die Schutzwirkung verbessert ist. Andererseits dient die Einstecktasche auch dem Schutz des Fahrzeugsitzes, wenn für eine Handhabung und eine Montage des Fahrzeugsitzes mittels eines Roboters eine sogenannte Rüsselplatte des Roboters in den Spalt zwischen Rückenlehne und Sitzpolster eingeschoben werden muss. Die Einstecktasche kann über die Länge des Spaltes zwischen Rückenlehne und Sitzpolster durchgehend ausgebildet sein oder sich nur über einen Teil dieser Strecke erstrecken. Möglich ist, dass die Einstecktasche beidseitig durch Querschweißungen lateral geschlossen ist. Hierbei können die Querschweißungen auch geneigt ausgebildet sein, womit sich eine sich verjüngende Einstecktasche ergibt. Die Einstecktasche muss nicht unbedingt mit der rückwärtigen Fläche der Rückenlehne fluchtend abschließen, sondern kann sich mehr oder weniger tief in den Spalt zwischen dem Sitzpolster und der Rückenlehne erstrecken.

DE 199 23 889 C2 beschreibt als Stand der Technik eine Fahrzeugsitz-Schutzfolie aus doppellagiger Kunststofffolie, nämlich einer Vorderlage und einer Rücklage, gemäß DE 41 32 714 A1**.** Bei dieser Fahrzeugsitz-Schutzfolie sind die zwei Taschen bildenden Bereiche der Rücklage durch Verbindungsstreifen verbunden, die sich über die freien Ränder der die Taschen bildenden Bereiche entlang von Querschweißungen erstrecken. Die Verbindungsstreifen sind auch mit der Vorderlage verbunden, so dass die somit im Wesentlichen durchgehende Rücklage eine randgeschlossene Ausnehmung aufweist. Die Vorderlage und die Rücklage weisen damit gleich große Umrisse auf und sind miteinander an allen vier Kanten durchgehend verbunden, also sowohl im Bereich der Querschweißungen als auch im Bereich der Längsränder. Während die Vorderlage durchgehend geschlossen ausgebildet ist, ist in der Rücklage die randgeschlossene Ausnehmung vorgesehen, die allseits mit Abstand zum Umriss der flachliegenden Fahrzeugsitz-Schutzfolie angeordnet ist und die einzige Öffnung darstellt, mit deren Hilfe die Fahrzeugsitz-Schutzfolie über die Rückenlehne und das Sitzpolster gestülpt werden kann. Durch die Verbindungsstreifen werden neben den beiden bisher bekannten Taschen zusätzliche, die Taschen verbindende Quertaschen geschaffen, die das Sitzpolster und die Rückenlehne in Übergangsbereichen hintergreifen und damit einen wirksamen Schutz dieser gefährdeten Stellen des Fahrzeugsitzes gegen Verschmutzung darstellen. Die Verrutschungsgefahr bei Benutzung des Fahrzeugsitzes, der mit einer Fahrzeugsitz-Schutzfolie geschützt ist, ist infolge der hintergreifenden Verbindungsstreifen reduziert. Es entfällt die Notwendigkeit einer zusätzlichen Verwendung von Gummibändern, Folienstreifen u. dgl. zum Sichern der Fahrzeugsitz-Schutzfolie und es erübrigt sich ein zusätzlicher Montageaufwand. Beim Überstülpen der Fahrzeugsitz-Schutzfolie gelangt diese vielmehr automatisch in ihre das Sitzpolster sowie die Rückenlehne umhüllende Schutzstellung. Durch die Querschweißung wird die Vorderlage mit der Rücklage an jedem Sitz durchgehend verbunden. Andererseits kann die Querschweißung jedoch so erfolgen, dass die einzelnen Fahrzeugsitz-Schutzfolien dabei zugleich voneinander abgetrennt werden, so dass sie in einem Stapel übereinander geschichtet abgelegt werden und auch in dieser Weise in einen Versand zu einem Hersteller des Fahrzeugsitzes, zu einem Fahrzeughersteller oder zu einer Werkstatt gelangen können. Daneben ist es aber auch möglich, die einzelnen Fahrzeugsitz-Schutzfolien über Perforationen aneinander hängend zu lassen und eine solche Endlosbahn auf einer Vorratsrolle aufzuwickeln. Ein ungewolltes Lösen oder Herabfallen der Fahrzeugsitz-Schutzfolie von dem Fahrzeugsitz soll dadurch vermieden werden, dass als gesondertes Teil zu der Fahrzeugsitz-Schutzfolie ein Gummiband verwendet wird, welches nach dem Überstülpen der Fahrzeugsitz-Schutzfolie als geschlossene Schleife so über die Rückenlehne geführt wird, dass das Gummiband im Übergangsbereich zwischen Sitzpolster und Rückenlehne anliegt. Gleichzeitig wird die Vorderlage des Sitzbezuges im Übergangsbereich zwischen Sitzpolster und Rückenlehne durch das Gummiband fixiert, so dass einer Verrutschungsgefahr entgegengewirkt wird. Alternativ wird vorgeschlagen, dass etwa im Mittelbereich des freien Rands der Tasche, die die Rückenlehne umschließt, zwei Folienstreifen angeschweißt werden. Die beiden Folienstreifen können dann nach dem Überstülpen der Fahrzeugsitz-Schutzfolie über den Fahrzeugsitz nach vorne geschlungen und dort miteinander verknotet werden, womit ein engeres Anliegen der Vorderlage der Fahrzeugsitz-Schutzfolie im Übergangsbereich zwischen Sitzpolster und Rückenlehne gewährleistet werden kann.

Gemäß DE 199 23 889 C2 wird eine weitere bekannte Fahrzeugsitz-Schutzfolie zunächst so hergestellt, wie es in DE-AS 16 30 878 beschrieben ist. Nach dem Zerteilen einer Kunststoffbahn in die einzelnen Fahrzeugsitz-Schutzfolien erfolgt ein Anschweißen eines Halbschlauchs entlang der freien Ränder der von der Rücklage gebildeten Taschen sowie entlang der freien Ränder der Vorderlage in dem von den Taschen nicht abgedeckten Bereich. Beim Anschweißen des Halbschlauchs wird ein Gummiband in Form einer Schleife eingelegt. Mit diesem Gummiband wird an der Fahrzeugsitz-Schutzfolie dann eine Öffnung geschaffen, die zum Überstülpen auf den Fahrzeugsitz genutzt wird. Das Gummiband übt dann eine gewisse Straffungswirkung aus, so dass insbesondere die Vorderlage der Fahrzeugsitz-Schutzfolie näher an dem Sitzpolster und an der Rückenlehne gehalten ist. Eine solche Fahrzeugsitz-Schutzfolie ist durch das Anschweißen des Halbschlauchs mit dem Gummiband, welches in Handarbeit durchgeführt wird, besonders aufwändig und teuer, erbringt aber andererseits eine gute Schutzwirkung. Das Überstülpen einer solchen Fahrzeugsitz-Schutzfolie über einen Fahrzeugsitz ist jedoch vergleichsweise schwieriger durchzuführen als bei der zuvor beschriebenen Fahrzeugsitz-Schutzfolie.

DE 199 23 889 C2 beschreibt es auch als bekannt, ein Gummiband auf den Rand einer randgeschlossenen Ausnehmung einer Fahrzeugsitz-Schutzfolie aufzunähen. Das Aufnähen geschieht in Handarbeit und unter Fixierung des Gummibands unter Vorspannung. Dies hat zur Folge, dass das Gummiband als elastischer Fremdkörper die unelastische Folie unter Faltenbildung zusammenzieht. Dies stört nicht nur optisch, sondern verhindert auch bereits das Aufwickeln auf eine Rolle. Selbst als Einzelstücke im Stapel lassen sich solche Fahrzeugsitz-Schutzfolien nur schwer handhaben. Weitere Nachteile dieser Ausführungsform sind ein faltiger Sitz auf dem Fahrzeugsitz, eine Störanfälligkeit für elektronische Schranken und eine Ein- und Weiterreißgefahr der Folie.

Schließlich beschreibt DE 199 23 889 C2 auch als bekannt einen Fahrzeugsitz-Schutzbezug für Fahrzeugsitze gemäß DE-OS 19 20 529**,** der aus einem allseitig elastisch dehnbaren Untergarngewebe mit hoher Rückdehnung und mit in gedehntem Zustand des elastischen Garngewebes eingestrickter hochfloriger Wolle oder einem ähnlichen Material besteht. Infolge der großen Dehnbarkeit ist ein derartiger Fahrzeugsitz-Schutzbezug einfach in der Handhabung und kann leicht auf den Fahrzeugsitz aufgebracht werden. Der Fahrzeugsitz-Schutzbezug kann als Universal-Fahrzeugsitz-Schutzbezug ausgebildet sein, der sich auch Fahrzeugsitzen unterschiedlicher Geometrie anpassen kann. Der Fahrzeugsitz-Schutzbezug kann in diesem Fall aus mehreren Teilen oder Lagen bestehen, wobei in einer der Lagen eine Öffnung vorgesehen ist, um den Fahrzeugsitz-Schutzbezug sowohl über die Rückenlehne als auch über das Sitzpolster ziehen zu können.

Vor diesem Hintergrund schlägt DE 199 23 889 C2 vor, zumindest die Rücklage einer Fahrzeugsitz-Schutzfolie ganz oder teilweise aus einer elastischen, rückstellfähigen Kunststofffolie herzustellen. Die Elastizität der Rücklage soll genutzt werden, um das Abnehmen und Wiederanlegen der Fahrzeugsitz-Schutzfolie zu ermöglichen, insbesondere im Zusammenhang mit der Montage des Kraftfahrzeugsitzes, zur Gewährleistung der Erreichbarkeit von Befestigungsschrauben des Fahrzeugsitzes, für den Einbau einer Schublade, eines Feuerlöschers u. ä. Infolge der Elastizität kann der Fahrzeugsitz-Schutzfolie auch in seinen Dimensionen etwas kleiner hergestellt werden als bisher. Die Elastizität erbringt dennoch eine leichte Handhabung beim Überstülpen und einen verbesserten Sitz der Fahrzeugsitz-Schutzfolie. Darüber hinaus legt sich die Fahrzeugsitz-Schutzfolie in übergestülptem Zustand exakt an die Kontur des KraftfahrzeugSitzes an. Damit entfällt eine Störmöglichkeit, wenn z. B. die richtige Position des Fahrzeugsitzes im Fahrzeug mit elektronischen Schranken vermessen und geprüft wird. Überhängende Folienbereiche oder Falten der Fahrzeugsitz-Schutzfolie können nicht mehr zu einer Störung führen. Die Fahrzeugsitz-Schutzfolie kann schnell und sicher sowie faltenfrei mit die Konturen des Fahrzeugsitzes eng umschließendem Sitz aufgezogen werden. Vorgeschlagen wird vorzugsweise die Ausstattung der die Rücklage bildenden Kunststofffolie mit einer elastischen Dehnung von mindestens 50 %, vorzugsweise mindestens 60 %. Einsatz findet als Material für das Folienmaterial der Rücklage ein Copolymer, insbesondere aus Ethylen-Vinylacetat oder Butylen-Vinylacetat, wobei auch andere Materialien den Anforderungen genügen können, beispielsweise auch ein thermoplastisches Elastomer oder ein besonders elastisches Low-Density Material, welches zumindest schichtweise oder in Abmischungen oder zu 100 % eingesetzt sein kann. Vorgeschlagen wird darüber hinaus, dass die elastische Rücklage mit einer Mehrschichtfolie ausgebildet ist, wobei eine Schicht der Mehrschichtfolie gezielt mit guten Verschweißeigenschaften ausgestattet wird. Darüber hinaus wird vorgeschlagen, dass die die Vorderlage bildende Kunststofffolie auf der dem Fahrzeugsitz zugekehrten Innenseite rutschsichernd und auf der Außenseite glatt ausgebildet sein kann.

DE 297 05 666 U1 schlägt einen Fahrzeugsitz-Schutzbezug aus einem Faservliesstoff vor, welcher einen angenehmen textilen Oberflächencharakter besitzen soll, keine "Abfaserungen" ausbilden soll, eine gute Passform an die jeweilige Gestaltung des Fahrzeugsitzes aufweisen soll und nach Gebrauch möglichst für den gleichen Verwendungszweck recycelt werden kann. Hierzu ist der Fahrzeugsitz-Schutzbezug gemäß DE 297 05 666 U1 aus einem Faservliesstoff hergestellt, dessen Flächengewicht kleiner ist als 100 g/m². Der Faservliesstoff wird hierzu in der Form des Fahrzeugsitz-Schutzbezuges zugeschnitten. Der derart gebildete, grundsätzlich einteilige Fahrzeugsitz-Schutzbezug bedeckt dann ganzflächig die Sitzfläche, die Sitzkanten und die Rückenlehne. Zur Gewährleistung der Passbeständigkeit und allseitigen Haftung des Fahrzeugsitz-Schutzbezuges wirken neben der zugeschnittenen Form des Fahrzeugsitz-Schutzbezuges zwei Halteelemente. Hierbei handelt es sich einerseits um ein am Sitzumschlag angenähtes Gummiband oder auf den gerafften Faservliesstoff aufgenähtes Textilband oder ein angenähtes Bindeband mit einseitiger Schlaufe sowie andererseits um eine weitere mechanische Verbindung zwischen einer am Sitzhinterteil des Fahrzeugsitz-Schutzbezuges angenähten Haltelasche und dem Lehnenhinterteil des Fahrzeugsitz-Schutzbezuges. Nach Gebrauch des Fahrzeugsitz-Schutzbezuges soll dieser grob zerkleinert werden. In einer Reißmaschine werden dann Reißfasern hergestellt, die wieder in ein Faservlies eingemischt werden können.

Die Patentschrift EP 2 913 224 B1 schlägt einen Fahrzeugsitz-Schutzbezug vor, bei dem eine Rücklage (zumindest teilweise) aus einer Kunststofffolie besteht, während eine Vorderlage (zumindest teilweise) aus einem Vlies besteht. Hierbei ist die Rücklage elastisch ausgebildet. Diese Ausgestaltung basiert auf dem Ansatz, die Vorderlage einerseits und die Rücklage andererseits gezielt an die jeweiligen Anforderungen anzupassen: Die mit dem Vlies gebildete Vorderlage stellt eine angenehme Kontaktfläche für den Nutzer bereit, welche im Bereich des Vlieses atmungsaktiv ist, was einerseits für die Ableitung von Schweiß und andererseits für die Ableitung von aus dem Fahrzeugsitz ausdampfender Restfeuchtigkeit von Vorteil ist. Genutzt werden kann auch ein deutlich verbessertes Schallemissionsverhalten des Vlieses bei Bewegungen des Benutzers auf dem Fahrzeugsitz. Andererseits kann auch bei einer nicht durchsichtigen Vorderlage aus einem Vlies die Rücklage aus Kunststoff durchsichtig bleiben, so dass der Fahrzeugsitz durch den Fahrzeugsitz-Schutzbezug sichtbar bleibt. Schließlich kann auch die Elastizität der Rücklage genutzt werden, um einen strammen Sitz des Fahrzeugsitz-Schutzbezuges, eine gute Montierbarkeit und Demontierbarkeit des Fahrzeugsitz-Schutzbezuges und u. U. auch eine mehrfache Verwendbarkeit des Fahrzeugsitz-Schutzbezuges zu gewährleisten. In dem Vlies können Fasern aus Polyethylen, PET, Polyamid und/oder Polypropylen Einsatz finden. Die Kunststofffolie im Bereich der Rücklage kann ein- oder mehrschichtig ausgebildet sein mit Herstellung der Kunststofffolie mit einem Laminieren, Kaschieren oder Koextrudieren. EP 2 913 224 B1 schlägt vor, die Vorderlage aus dem Vlies und die Rücklage aus der Kunststofffolie nicht miteinander zu vernähen, sondern vielmehr miteinander zu verschweißen. Hierzu kann das Vlies konkave Aufwölbungen aufweisen, im Bereich welcher das Vlies verdichtet ist. In verdickten Bereichen abseits dieser konkaven Aufwölbungen kann das Verschweißen des Vlieses mit der Kunststofffolie erfolgen. Zum Verschweißen kann ein Thermotransfer-Verfahren, ein Heizdraht oder anderes Heizelement, ggf. mit einem Anpressen der erwärmten, zu verschweißenden Oberflächen unter Druck, verwendet werden.

In der nicht vorveröffentlichten europäischen Patentanmeldung mit dem amtlichen Aktenzeichen EP 16 155 462.1 werden als Stand der Technik gemäß den Internet-Adressen
- http://www.slipngrip.com/SlipNGrip_Seat_Covers/FG-P9943-SC.html
- http://www.gammaplast.com/public/download/scheda_1_coprisedili_001.pdf

Fahrzeugsitz-Schutzfolien beschrieben, die als eine Art Überwurf benutzt werden und vereinfacht als mantelartig bezeichnet werden können. Diese Fahrzeugsitz-Schutzfolien sind mit einem oberen Schlauchteil gebildet, der in Umfangsrichtung geschlossen ausgebildet ist und im Bereich des oberen Randes nach oben geschlossen ist, womit das obere Schlauchteil eine im Querschnitt randgeschlossene obere Tasche bildet. Unmittelbar an dieses obere Schlauchteil schließt ein unteres Schlauchteil an, welches auf der Rückseite einen in Längsrichtung durchgehenden Schlitz aufweist und sowohl im Übergangsbereich zu dem oberen Schlauchteil nach oben als auch im Bereich eines unteren Randes nach unten nicht geschlossen ist. Unter Öffnung des Schlitzes des unteren Schlauchteils kann die Fahrzeugsitz-Schutzfolie über einen Fahrzeugsitz geworfen werden, wobei die von dem oberen Schlauchteil gebildete obere, randgeschlossene Tasche auf eine Kopfstütze und den oberen Endbereich der Rückenlehne aufgezogen werden kann. Die obere Tasche muss hier einer Querschnitt aufweisen, welcher zumindest genauso groß ist wie der Querschnitt der Rückenlehne im oberen Endbereich derselben. Das geöffnete untere Schlauchteil deckt sowohl den unteren Bereich der Rückenlehne als auch die Sitzfläche ab, wobei das untere Schlauchteil seitlich über das Sitzpolster überhängen kann. Um ein Einreißen der Fahrzeugsitz-Schutzfolie im Übergangsbereich von dem Schlitz des unteren Schlauchteils zu dem oberen Schlauchteil zu vermeiden, kann der Endbereich des Schlitzes des unteren Schlauchteils im Übergangsbereich zu dem oberen Schlauchteil mit einer aufgeklebten Verstärkungsfolie verstärkt sein. Die Patentanmeldung EP 16 155 462.1 schlägt vor diesem Hintergrund eine Fahrzeugsitz-Schutzfolie vor, die aus einer Kunststofffolie mit einer Dicke von weniger als 80 µm hergestellt ist. Ein oberes, in Umfangsrichtung nicht geschlossenes und somit randoffenes Schlauchteil wird allenfalls für das Überziehen über eine Kopfstütze des Fahrzeugsitzes verwendet, während das untere, mit einem Schlitz ausgestattete Schlauchteil sich über die gesamte, von dem Sitzpolster und der Rückenlehne ausgebildete Sitzfläche erstreckt und hier geschlitzt ausgebildet ist. Vorzugsweise ist überhaupt kein oberes Schlauchteil vorhanden, so dass der Schlitz der Fahrzeugsitz-Schutzfolie bis zum geschlossenen oberen Rand der Fahrzeugsitz-Schutzfolie, insbesondere einer Verschweißung im Bereich des oberen Rands, durchgeht. Damit ist auch die gesamte obere Tasche im Querschnitt randoffen ausgebildet. Hierbei können durch den Schlitz voneinander getrennte Rücklagenteile überlappend zueinander angeordnet sein, womit dann im Bereich einer Schweißnaht zwecks Bereitstellung des oberen Randes drei Lagen miteinander verschweißt sein können. Die Fahrzeugsitz-Schutzfolie kann aus einer einstückigen Kunststofffolie bestehen, die auch als Mehrschichtfolie ausgebildet sein kann. Möglich ist, dass die laterale Erstreckung einer Vorderlage kleiner ist als die laterale Erstreckung einer Rückenlehne eines Fahrzeugsitzes oder sogar ungefähr dem halben Umfang der Kopfstütze in dem oberen Endbereich der Kopfstütze entspricht oder kleiner ist als dieser. Dieser Ausgestaltung liegt die Erkenntnis zugrunde, dass infolge des Schlitzes der Rücklage der Querschnitt der Fahrzeugsitz-Schutzfolie so weit geöffnet werden kann, dass diese (mit hinreichendem Abstand von dem oberen Rand konisch in Richtung des oberen Randes zulaufend) über eine Rückenlehne mit größerem Querschnitt gestülpt werden kann. Eine derartige Fahrzeugsitz-Schutzfolie kann somit auch für unterschiedliche Fahrzeugsitztypen mit unterschiedlichen Abmessungen verwendet werden.

In der nicht vorveröffentlichten europäischen Patentanmeldung EP 16 171 980.2 wird einen Fahrzeugsitz-Schutzbezug vorgeschlagen, bei welchem seitliche Teilbereiche einer Materialbahn umgefaltet sind. Der mittige Teilbereich der Materialbahn bildet eine Vorderlage des Fahrzeugsitz-Schutzbezuges, während die seitlichen Teilbereiche der Materialbahn jeweils Rücklagenteile bilden. Durch eine Verschweißung der oberen und unteren Ränder der Vorderlage und der Rücklagenteile werden eine obere und eine untere Tasche gebildet. Zwischen den Rücklagenteilen sind die Taschen im Querschnitt offen ausgebildet. Zwischen den Rücklagenteilen ergibt sich eine Ausnehmung der Rücklage, welche in Längsrichtung zwischen dem oberen und dem unteren Rand durchgehend ist. Die seitlichen Ränder der Rücklagenteile weisen zwischen den Taschen konkave Verläufe auf, sodass die Ausnehmung der Rücklage zwischen dem Taschen eine sich vergrößernde laterale Erstreckung aufweist. Der Fahrzeugsitz-Schutzbezug ist vorzugsweise aus einem sogenannten Non-Woven-Material oder einem Vlies hergestellt, wobei ein Flächengewicht der eingesetzten Materialbahn 12,0 gr/m² bis 60,0 gr/m² betragen kann. Hiermit kann eine Luftdurchlässigkeit des Fahrzeugsitz-Schutzbezuges von zumindest 2000 mm/s gewährleistet werden.

Da Fahrzeugsitz-Schutzfolien selbst bei Einbringung von Löchern oder Perforationen allenfalls eine reduzierte Luftdurchlässigkeit aufweisen, steigt die Nachfrage nach Fahrzeugsitz-Schutzbezügen aus einem atmungsaktiven Material, welches beispielsweise eine Resttrocknung des Fahrzeugsitzes nach dessen Herstellung und Ausdünstungen desselben erlauben soll und/oder einen angenehmen Kontakt für die auf dem Fahrzeugsitz sitzende Person gewährleisten soll insbesondere auch mit einem Abtransport von Schweiß. Aus diesem Grund finden zunehmend Fahrzeugsitz-Schutzbezüge aus Vlies Einsatz, welches auch als Non-Woven-Material bezeichnet werden kann. Nachteilig bei Fahrzeugsitz-Schutzbezügen aus diesen Materialien ist, dass diese Materialien mit dem zu schützenden Fahrzeugsitz eine geringe Reibung ausbilden, weshalb derartige Fahrzeugsitz-Schutzbezüge gegenüber dem Fahrzeugsitz verrutschen und sich schlimmstenfalls unbeabsichtigt von dem Fahrzeugsitz lösen. In der nicht vorveröffentlichten europäischen Patentanmeldung EP 16 171 980.2 wird aus diesem Grund vorgeschlagen, den Fahrzeugsitz-Schutzbezug durch einen Einsteckbereich oder eine Einstecktasche des Fahrzeugsitz-Schutzbezuges in dem Spalt zwischen der Rückenlehne und dem Sitzpolster des Fahrzeugsitzes zusätzlich zu sichern. Für die Art der Sicherung nennt die europäische Patentanmeldung EP 16 171 980.2 folgende Möglichkeiten:
- Möglich ist, dass der Einsteckbereich des Fahrzeugsitz-Schutzbezuges in dem Kontaktbereich mit der Rückenlehne und dem Sitzpolster im Bereich des Spaltes mit einer ein Verrutschen hemmenden Zusatzschicht ausgestattet ist.
- Möglich ist, dass der Einsteckbereich in dem Spalt dadurch gesichert wird, dass ein Faden oder ein Band (elastisch oder nicht-elastisch) auf der dem Fahrzeugsitz abgewandten Seite des Einsteckbereichs in lateraler Richtung durch den Spalt geführt ist und unter Straffung oder Spannung auf der Rückseite des Fahrzeugsitzes verknotet oder anderweitig fixiert ist.
- Es kann auch ein Gummiband über den Fahrzeugsitz und den Fahrzeugsitz-Schutzbezug gestülpt werden, welches dann den Fahrzeugsitz-Schutzbezug mit dem Einsteckbereich in den Spalt zieht und darin sichert.
- Möglich ist, dass für den Fall, dass der Spalt zwischen der Rückenlehne des Fahrzeugsitzes und dem Sitzpolster des Fahrzeugsitzes bis zur Rückseite des Fahrzeugsitzes durchgehend ausgebildet ist, der Einsteckbereich des Fahrzeugsitz-Schutzbezuges bis auf die Rückseite des Fahrzeugsitzes hindurchgeführt ist, wo dieser dann mit der Rücklage des Fahrzeugsitz-Schutzbezuges verbunden sein kann (beispielsweise mit einer auf die Rücklage aufgeklebten beidseitig klebenden Zusatzschicht verklebt wird).
- Möglich ist auch insbesondere für einen nicht in Richtung der Rückseite des Fahrzeugsitzes durchgehenden Spalt, dass nach Einführen des Einsteckbereichs in den Spalt ein Sicherungsstab, insbesondere ein Kunststoffrohr, bei lateraler Ausrichtung der Längsachse des Sicherungsstabs so in den Spalt eingeführt wird, dass der Wiederaustritt des Sicherungsstabs infolge einer Verjüngung des Spalts zwischen der Rückenlehne und dem Sitzpolster behindert ist. Anstelle eines Sicherungsstabs kann auch ein aufgeblasener Kunststoffschlauch oder ein geschäumter Kunststoffschlauch, beispielsweise aus Polyethylen oder Polypropylen, verwendet werden, der dann für eine Entsorgung entleert werden kann, so dass dieser kein großes Volumen besitzt. Vorzugsweise besteht der Kunststoffschlauch aus demselben Material wie das Vlies oder das Non-Woven-Material, aus welchem die Materialbahn besteht, oder aus demselben Material wie die Zusatzschicht.
- Grundsätzlich sind aber beliebige anderweitige Sicherungsmöglichkeiten, insbesondere eine Fixierung mittels Kabelbindern u. ä., möglich.

Soll eine gute Fixierung des Fahrzeugsitz-Schutzbezuges auf dem Fahrzeugsitz erfolgen, soll alternativ oder kumulativ
- eine Rutschhemmung durch geeignete Gestaltung der Kontaktflächen des Fahrzeugsitz-Schutzbezuges, insbesondere mit einer entsprechenden Zusatzschicht, und
- ein mechanisches Fixieren, beispielsweise durch die vorgenannten Sicherungsmaßnahmen des Einsteckbereichs und/oder weitere straffende oder sichernde mechanische Maßnahmen,
erfolgen.

Die nicht gattungsgemäße Druckschrift US 2007/0040426 A1 offenbart einen massiven permanenten Sitzbezug, der aus mehreren Gewebebahnen besteht. Zwischen den miteinander vernähten seitlichen Gewebebahnen und einer vorderen Gewebebahn sind randgeschlossene Schulteröffnungen sowie randgeschlossene Hüftöffnungen gebildet. Zwischen einer Schulteröffnung und einer Hüftöffnung ist die zugeordnete seitliche Gewebebahn mit der vorderen Gewebebahn über einen Reißverschluss verbunden. Die Schulteröffnungen und die Hüftöffnungen sind dafür bestimmt, dass durch diese ein Gurt des Fahrzeugsitzes hindurchgeführt werden kann. Die seitlichen Gewebebahnen verfügen darüber hinaus über Sitzlehnenöffnungen, durch welche eine Sitzlehne durch den Sitzbezug hindurchgeführt werden kann. Die Öffnungen sollen jeweils elastisch zusammenschnürend ausgebildet sein, wozu vorgeschlagen wird, dass die Öffnungen einen umlaufenden Saum aufweisen, durch welchen sich ein elastisches Band erstrecken kann.

### AUFGABE DER ERFINDUNG

Der Erfindung liegt die Aufgabe zugrunde, alternative oder kumulative Maßnahmen zur Fixierung eines Fahrzeugsitz-Schutzbezuges auf einem Fahrzeugsitz vorzuschlagen, welche insbesondere
- einen geringen Herstellungsaufwand bedingen,
- eine einfache Handhabung des Fahrzeugsitz-Schutzbezuges und dessen Applikation an den Fahrzeugsitz ermöglichen,
- eine Straffung des Fahrzeugsitz-Schutzbezuges auf dem Fahrzeugsitz ermöglichen,
- einen ungehinderten Eintritt und/oder Austritt eines Handhabungsgeräts wie eines Roboterarms oder einer Rüsselplatte in einen Spalt zwischen einer Rückenlehne und einem Sitzpolster eines Fahrzeugsitzes und/oder
- eine sortenreine Entsorgung des Fahrzeugsitz-Schutzbezuges ermöglichen.

Der vorliegenden Erfindung liegt weiterhin die Aufgabe zugrunde, ein alternatives oder verbessertes Verfahren zur Verwendung eines Fahrzeugsitz-Schutzbezuges sowie eine Fahrzeugsitz-Einheit vorzuschlagen.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die Erfindung schlägt einen Fahrzeugsitz-Schutzbezug vor, der eine Vorderlage sowie eine Rücklage aufweist. Die Vorderlage ist hierbei zum Abdecken der Vorderseite des Fahrzeugsitzes bestimmt, während sich die Rücklage auf der Rückseite des Fahrzeugsitzes erstreckt. Die Vorderlage und die Rücklage sind im Bereich ihrer Ränder über Faltungen oder Schweißungen miteinander verbunden. Der Fahrzeugsitz-Schutzbezug weist eine obere Tasche und/oder eine untere Tasche auf, im Bereich welcher der Fahrzeugsitz-Schutzbezug auf den Fahrzeugsitz aufgezogen werden kann. Die obere Tasche und/oder die untere Tasche ist/sind von der Vorderlage und der Rücklage gebildet.

Erfindungsgemäß weist/weisen die Vorderlage und/oder die Rücklage (und unter Umständen auch der Übergangsbereich von der Vorderlage zur Rücklage) eine randgeschlossene Ausnehmung auf. Durch die randgeschlossene Ausnehmung wird ein Teilbereich der Vorderlage und/oder der Rücklage abgetrennt, welcher eine Lasche bildet, die die randgeschlossene Ausnehmung (mit) begrenzt. Beide Endbereiche der Lasche sind somit nicht frei, sondern gehen in andere Teilbereiche der Vorderlage und/oder Rücklage des Fahrzeugsitz-Schutzbezuges über. Hierbei erfolgt der Übergang einstückig mittels der Materialbahn, welche zur Herstellung der Lasche und den unmittelbar der Lasche benachbarten Teilbereichen der Vorderlage und/oder Rücklage des Fahrzeugsitz-Schutzbezuges verwendet worden ist. Durch die Anbindung der Lasche in beiden Endbereichen wirkt diese multifunktional, indem diese einerseits vermeidet, dass die untere Tasche nach vorne von dem Fahrzeugsitz abgezogen wird, und andererseits vermeidet, dass die obere Tasche nach oben von der Rückenlehne abgezogen wird.

Für eine erste Variante der Erfindung ist die randgeschlossene Ausnehmung als Einschnitt ausgebildet, so dass die die Ausnehmung begrenzenden Materialbereiche der Fahrzeugsitz-Schutzfolie unmittelbar aneinander angrenzen. Für eine zweite Variante der Erfindung ist die randgeschlossene Ausnehmung als eine Art Ausschnitt ausgebildet, so dass die die Ausnehmung begrenzenden Materialbereiche zumindest in einem Teilbereich der Ausnehmung nicht unmittelbar aneinander angrenzen, sondern voneinander beabstandet sind. Für eine dritte Variante der Erfindung ist die randgeschlossene Ausnehmung von einer Perforation gebildet, so dass das Freilegen der Ausnehmung erst durch Durchtrennung der Perforation erfolgt.

Erfindungsgemäß ist der Fahrzeugsitz-Schutzbezug ganz oder teilweise aus einer Kunststofffolie hergestellt. Eine derartige Kunststofffolie kann aus einer Materialbahn durch Falten oder aus einem Materialschlauch u. ä. hergestellt sein. Möglich ist, dass eine ein- oder mehrschichtige Kunststofffolie Einsatz findet, wobei bei der Verwendung mehrerer Schichten die einzelnen Schichten den jeweiligen Anforderungen Rechnung tragen können (beispielsweise kann die der Person zugewandte Schicht einen angenehmen Hautkontakt und/oder ein leichten Rutschen auf der Kunststofffolie gewährleisten; die dem Fahrzeugsitz zugewandte Schicht kann eine erhöhte Reibung gewährleisten; eine mittlere Schicht kann die erforderliche Elastizität und/oder eine plastische Verformbarkeit gewährleisten). Möglich ist, dass die Kunststofffolie perforiert ist, gelocht ist, gezielt mit einer Elastizität ausgestattet ist, eine Korona-Behandlung aufweist u. ä. Grundsätzlich können für die Kunststofffolie und deren Schichten beliebige Kunststoffmaterialien Einsatz finden.

Alternativ oder zusätzlich möglich ist, dass der erfindungsgemäße Fahrzeugsitz-Schutzbezug zumindest teilweise aus einem Vlies hergestellt ist, so dass eine angestrebte Atmungsaktivität und/oder ein angenehmer Kontakt für die auf dem Fahrzeugsitz sitzende Person gewährleistet sind/ist. Um lediglich ein nicht beschränkendes Beispiel zu nennen, kann das Vlies aus nicht miteinander verwebten Fasern bestehen. Beispielsweise Einsatz finden können Fasern aus Polyethylen, PET, Polyamid, Polyprophylen. Möglich ist beispielsweise der Einsatz einer Materialbahn eines Vlieses mit einem Flächengewicht von 20 bis 100 gr/m², insbesondere 35 bis 70 gr/m² oder 40 bis 60 gr/m² oder 45 bis 55 gr/m². Möglich ist sogar im Rahmen der Erfindung auch, dass der Fahrzeugsitz-Schutzbezug als "hybrider" Schutzbezug ausgebildet ist mit einem Teilbereich, beispielsweise einer Vorderlage, aus einem Vlies, sowie einem anderen Teilbereich, beispielsweise einer Rücklage, aus einer Kunststofffolie, für dies in dem europäischen Patent EP 2 913 224 B1 beschrieben ist, welches diesbezüglich zum Gegenstand der vorliegenden Patentanmeldung gemacht wird. Beispielsweise kann in diesem Fall zumindest die Lasche aus der Kunststofffolie hergestellt sein, wobei dann vorteilhafterweise ein elastisches Material für die Kunststofffolie verwendet wird, um die Lasche mit einer gewissen Elastizität auszustatten.

Um lediglich einige nicht beschränkende Beispiele zu nennen, kann die Herstellung der randgeschlossenen Ausnehmung durch Schneiden, Stanzen, Trennung mittels eines Lasers u. ä. erfolgen, wobei dies kontinuierlich oder intermittierend in dem Fertigungsprozess des Fahrzeugsitz-Schutzbezuges erfolgen kann.

Vorzugsweise verläuft die randgeschlossene Ausnehmung in Längsrichtung des Fahrzeugsitz-Schutzbezuges, wobei ein beliebiger geradliniger oder gekrümmter Verlauf der randgeschlossenen Ausnehmung möglich ist. Die randgeschlossene Ausnehmung (und damit auch die die Ausnehmung begrenzende Lasche) ist insbesondere im Übergangsbereich von der Rückenlehne zum Sitzpolster und/oder zwischen der oberen und unteren Tasche angeordnet.

Die Lasche des Fahrzeugsitz-Schutzbezuges, vorzugsweise zwei Laschen auf beiden lateralen Außenseiten des Fahrzeugsitz-Schutzbezuges, werden um einen vorzugsweise lateralen Vorsprung des Fahrzeugsitzes geschlungen, womit die angestrebte zusätzliche Fixierung erfolgen kann. Um lediglich einige nicht beschränkende Beispiele zu nennen, kann es sich bei einem geeigneten Vorsprung des Fahrzeugsitzes um einen Drehknopf zwischen Sitzpolster und Rückenlehne im Bereich des Lehnenscharniers (oder eine Abdeckung des Drehknopfes) handeln, über welchen eine Verstellung der Neigung der Rückenlehne herbeigeführt werden kann, oder der Vorsprung kann von einer Unterkonstruktion des Fahrzeugsitzes ausgebildet sein oder von einer Rahmenkonstruktion oder Konsole, über welchen ein Schaumkörper des Sitzpolsters oder der Rückenlehne an einer Unterkonstruktion des Fahrzeugsitzes befestigt werden kann.

Über die Wahl einer etwaigen Elastizität der Lasche und die konstruktive Vorgabe der Breite der Lasche sowie deren Länge über die Gestaltung der randgeschlossenen Ausnehmung kann Einfluss darauf genommen werden, in welchem Ausmaß ein "Verspannen" des Fahrzeugsitz-Schutzbezuges (insbesondere im Bereich der Taschen) mit dem Fahrzeugsitz erfolgt, wobei mittels der Lasche der Fahrzeugsitz-Schutzbezug im Bereich der oberen Tasche auf der Rückenlehne nach unten gezogen wird und im Bereich der unteren Tasche auf dem Sitzpolster nach hinten gezogen wird.

Hinsichtlich der Gestaltung der Länge der Lasche gibt es viele Möglichkeiten. Um lediglich einige nicht beschränkende Beispiele zu nennen, kann die Länge der Lasche dem Abstand der Vorderlage zwischen der oberen Tasche und der unteren Tasche entsprechen oder mindestens 70 %, mindestens 80 % oder mindestens 90 % dieses Abstandes betragen. Alternativ oder kumulativ möglich ist, dass die Länge der Lasche dem Gesamtweg von einem lateralen äußeren Ende des unteren Randes der Rücklage im Bereich der oberen Tasche zu dem Vorsprung mit dessen Teilumschlingung zu einem lateral äußeren Ende des hinteren Randes der Rücklage im Bereich der unteren Tasche für auf den Fahrzeugsitz aufgezogenen Fahrzeugsitz-Schutzbezug entspricht oder maximal +/- 30 % oder +/- 20 % oder +/- 10 % von diesem Gesamtweg abweicht.

In weiterer Ausgestaltung der Erfindung bildet/bilden die Vorderlage und/oder die Rücklage einen Übergangsbereich aus. Hierbei kann der Übergangsbereich zwischen der oberen Tasche und der unteren Tasche angeordnet sein und/oder zwischen dem Teil der Vorderlage, der der Abdeckung des Sitzpolsters dient, und dem Teil der Vorderlage, der der Abdeckung der Rückenlehne dient. In diesem Fall sind/ist die Lasche und/oder die randgeschlossene Ausnehmung im lateralen Seitenbereich des Übergangsbereichs angeordnet.

Grundsätzlich möglich ist, dass der Übergangsbereich und damit auch die Lasche von der Vorderlage, der Rücklage oder auch gemeinsam von der Vorderlage und der Rücklage ausgebildet ist. Hierbei kann für die letztgenannte Variante der gemeinsamen Ausbildung der Lasche von der Vorderlage und der Rücklage das Material der Vorderlage und der Rücklage im Bereich der Lasche in Längsrichtung derselben miteinander verschweißt sein, wobei dann die von der Vorderlage einerseits und der Rücklage andererseits gebildeten Teilstreifen der Lasche in den Endbereichen jeweils einstückig in die benachbarten Teilbereiche der Vorderlage und Rücklage übergehen. Möglich ist auch, dass die randgeschlossene Ausnehmung zur Abtrennung der Lasche im Übergangsbereich von der Vorderlage zur Rücklage (also im Bereich einer Faltung oder Schweißung) angeordnet ist.

In bevorzugter Ausgestaltung der Erfindung ist der Übergangsbereich (und damit auch die Lasche) ausschließlich von der Vorderlage ausgebildet. Diese Ausgestaltung der Erfindung macht sich insbesondere zu Nutze, dass sich die Vorderlage nicht nur auf der Vorderseite des Fahrzeugsitzes erstreckt, sondern sich auch im Bereich Ihrer lateralen Ränder im Seitenbereich des Fahrzeugsitzes erstreckt. In diesem Seitenbereich ist dann in dem Übergangsbereich "überschüssiges" Material vorhanden, welches durch die randgeschlossene Ausnehmung abgetrennt werden kann zur Bildung der Lasche, die dann zur Fixierung des Fahrzeugsitz-Schutzbezuges auf dem Fahrzeugsitz um den Vorsprung des Fahrzeugsitzes geschlungen werden kann.

Grundsätzlich möglich ist, dass die laterale Erstreckung des Übergangsbereichs der sonstigen lateralen Erstreckung der Vorderlage entspricht. Für einen besonderen Vorschlag der Erfindung ist allerdings die laterale Erstreckung des Übergangsbereichs kleiner als die laterale Erstreckung der Vorderlage im Bereich der oberen Tasche und/oder unteren Tasche, so dass hier auch Teilbereiche des Fahrzeugsitz-Schutzbezuges gezielt während der Herstellung desselben entfernt worden sein können.

Grundsätzlich können die Abmessungen und Geometrien des Fahrzeugsitz-Schutzbezuges und der einzelnen Lagen und Bereiche desselben beliebig sein. Für einen Vorschlag der Erfindung entspricht die Länge der Vorderlage zumindest der Summe der Längen des Sitzpolsters, der Rückenlehne (und ggf. einer Kopfstütze der Rückenlehne) und des Übergangsbereichs. In diesem Fall bildet der Übergangsbereich einen Einsteckbereich zur Bildung einer Einstecktasche, die in einen Bereich zwischen dem Sitzpolster und der Rückenlehne des Fahrzeugsitzes einsteckbar ist. Alternativ oder zusätzlich kann der Übergangsbereich mindestens einen Laschenbereich zur Bildung der mindestens einen Lasche ausbilden. Vorzugsweise bildet der Übergangsbereich sowohl den Einsteckbereich als auch den Laschenbereich aus, die dann über die randgeschlossene Ausnehmung voneinander getrennt sind.

Für den Fall, dass der Fahrzeugsitz-Schutzbezug so gestaltet und dimensioniert ist, dass dieser eine Einstecktasche ausbildet, kann diese Einstecktasche lateral offen sein. Durchaus möglich ist aber auch, dass die Einstecktasche lateral teilweise oder vollständig durch eine Schweißung geschlossen ist.

Grundsätzlich kann an dem Fahrzeugsitz-Schutzbezug lediglich eine einzige Lasche vorgesehen sein, über die dann der Fahrzeugsitz-Schutzbezug auf einer Seite zusätzlich mit dem Fahrzeugsitz verbunden werden kann. Vorzugsweise besitzt der Fahrzeugsitz-Schutzbezug aber zwei Laschen, die jeweils an einer lateralen Seite angeordnet sind, so dass eine Verbindung des Fahrzeugsitz-Schutzbezuges auf beiden lateralen Seiten des Fahrzeugsitzes mit geeigneten Vorsprüngen erfolgen kann. Hierbei können die beiden Laschen (und die zugeordneten randgeschlossenen Ausnehmungen) identisch ausgebildet sein oder auch unterschiedlich ausgebildet sein, womit der konstruktiven Gestaltung des Fahrzeugsitzes und des Unterbaus des Fahrzeugsitzes sowie der Einbauumgebung gezielt Rechnung getragen werden kann.

Grundsätzlich können die Laschen beliebig ausgestaltet sein und einen beliebigen Abstand voneinander aufweisen. Als vorteilhaft hat sich erwiesen, wenn der laterale Abstand der Laschen ungefähr der lateralen Erstreckung des Fahrzeugsitzes entspricht, da in diesem Fall die von den Laschen erzeugten Befestigungs- und ggf. Zugkräfte jeweils im lateralen Seitenbereich den Fahrzeugsitz-Schutzbezug auf der Rückenlehne bzw. dem Sitzpolster halten und ggf. straffen.

Eine weitere Lösung der der Erfindung zugrunde liegenden Aufgabe ist gegeben durch eine Fahrzeugsitz-Einheit. Eine derartige Fahrzeugsitz-Einheit ist einerseits mit einem Fahrzeugsitz und andererseits mit einem Fahrzeugsitz-Schutzbezug, der den Fahrzeugsitz schützt, gebildet. Der Fahrzeugsitz-Schutzbezug weist eine Vorderlage, eine Rücklage und eine obere und/oder untere Tasche auf. Hierbei weist der Fahrzeugsitz-Schutzbezug eine Lasche auf, die einstückig von der Vorderlage und/oder von der Rücklage ausgebildet ist. Die Lasche erstreckt sich auf einer lateralen Seite des Fahrzeugsitzes von der Vorderseite oder einer Seite des Fahrzeugsitz-Schutzbezuges um einen Vorsprung des Fahrzeugsitzes (wieder auf derselben lateralen Seite des Fahrzeugsitzes) zurück zu der Vorderseite oder Seite des Fahrzeugsitz-Schutzbezuges. Hierbei ist die Lasche (zumindest in dem den Fahrzeugsitz schützenden, aufgezogenen Zustand) in beiden Endbereichen mit der Vorderseite oder Seite des Fahrzeugsitz-Schutzbezuges verbunden. Möglich ist hierbei, dass die Lasche durch eine randgeschlossene Ausnehmung wie zuvor erläutert gebildet oder von dem restlichen Teil des Fahrzeugsitz-Schutzbezuges zwischen den Endbereichen abgetrennt ist. In diesem Fall kann die Lasche in beiden Endbereichen einstückig in das Material der Vorderseite oder Seite des Fahrzeugsitz-Schutzbezuges und damit in die Vorderlage und/oder Rücklage übergehen. Möglich ist aber auch, dass zunächst in einem ausgelieferten Zustand des Fahrzeugsitz-Schutzbezuges die Lasche nur in einem Endbereich einstückig in das Material der Vorderseite oder Seite des Fahrzeugsitz-Schutzbezuges übergeht, während der andere Endbereich zunächst frei ist. Somit erstreckt sich die Lasche als eine Art freier Streifen oder als Band von dem Material der Vorderseite oder Seite des Fahrzeugsitz-Schutzbezuges. Die Verbindung des freien Endbereichs der Lasche mit dem Material der Vorderseite oder Seite des Fahrzeugsitz-Schutzbezuges erfolgt dann erst nach dem Aufziehen des Fahrzeugsitz-Schutzbezuges auf den Fahrzeugsitz. Für eine Variante der Erfindung ist der freie Endbereich mit einer (unter Umständen durch eine Abziehfolie abgedeckte und geschützte) Klebefläche ausgestattet, über die dann der Benutzer die Lasche nach dem Umschlingen des Vorsprungs des Fahrzeugsitzes an der Seite oder der Vorderseite des Fahrzeugsitz-Schutzbezuges durch Ankleben befestigen kann. Entsprechend kann natürlich auch eine Klebefläche an dem Ort der Seite oder Vorderseite des Fahrzeugsitz-Schutzbezuges vorgesehen sein, an dem die Lasche angeklebt werden soll. Für eine andere Variante der Erfindung ist der Endbereich der Lasche über eine Verschweißung mit der Seite oder Vorderseite des Fahrzeugsitz-Schutzbezuges verbunden. Für eine dritte Variante der Erfindung wird der freie Endbereich der Lasche mit der Seite oder Vorderseite des Fahrzeugsitz-Schutzbezuges (oder einem hiervon bereitgestellten Streifen oder einer hier vorgesehenen Ausnehmung) verknotet. In diesem Zusammenhang bezeichnet die Seite oder Vorderseite des Fahrzeugsitz-Schutzbezuges den Teilbereich des Fahrzeugsitz-Schutzbezuges, der in dem aufgezogenen Zustand des Fahrzeugsitz-Schutzbezuges auf der Vorderseite bzw. der Seite des Fahrzeugsitzes angeordnet ist.

Eine weitere Lösung der der Erfindung zugrunde liegenden Aufgabe ist gegeben mit einem Verfahren zur Verwendung eines Fahrzeugsitz-Schutzbezuges. Bei einem derartigen Verfahren erfolgt ein Überstülpen oder Aufziehen einer oberen Tasche des Fahrzeugsitz-Schutzbezuges über eine Rückenlehne (ggf. mit einer Kopfstütze der Rückenlehne) eines Fahrzeugsitzes und/oder ein Überstülpen einer unteren Tasche des Fahrzeugsitz-Schutzbezuges über ein Sitzpolster eines Fahrzeugsitzes. Neben der Verbindung des Fahrzeugsitz-Schutzbezuges über die obere Tasche und/oder untere Tasche erfolgt eine Verbindung des Fahrzeugsitz-Schutzbezuges mit dem Fahrzeugsitz, indem mit mindestens einer Lasche des Fahrzeugsitz-Schutzbezuges ein Vorsprung des Fahrzeugsitzes umschlungen wird. Vorzugsweise erfolgt dies für zwei Laschen des Fahrzeugsitz-Schutzbezuges auf beiden lateralen Seiten des Fahrzeugsitzes.

Ohne dass dies zwingend erforderlich ist, kann zusätzlich in weiterer Ausgestaltung der Erfindung eine Einstecktasche des Fahrzeugsitz-Schutzbezuges in einen Spalt zwischen der Rückenlehne und dem Sitzpolster eingesteckt werden.

In der vorliegenden Beschreibungseinleitung wird der Fahrzeugsitz-Schutzbezug so beschrieben, dass dieser in seinem Auslieferung- und/oder Verkaufszustand bereits die randgeschlossene Ausnehmung ausbildet, sodass die Lasche bereits (abseits der integral verbundenen Endbereiche der Lasche) von dem weiteren Teilbereich des Fahrzeugsitz-Schutzbezuges abgetrennt ist. Von der Erfindung sind aber auch Ausführungsformen umfasst, bei welchen der Fahrzeugsitz-Schutzbezug in dem seitens des Herstellers ausgelieferten Zustand eine Perforation für eine randgeschlossene Ausnehmung aufweist. Hierunter wird eine Ausführungsform verstanden, bei welcher mittels der Perforation (beispielsweise mit mehreren nebeneinanderliegenden Teilausstanzungen, Teileinschnitten, Löchern oder Material-Anritzungen oder -Schwächungen) ermöglicht ist, dass eine randgeschlossene Ausnehmung und damit die teilweise Abtrennung der Lasche durch den Abnehmer erfolgen kann.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer randgeschlossenen Ausnehmung oder Lasche die Rede ist, ist dies so zu verstehen, dass genau eine randgeschlossene Ausnehmung oder Lasche, zwei oder mehr randgeschlossene Ausnehmungen oder Laschen vorhanden sein können. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt schematisch in einer Seitenansicht einen Fahrzeugsitz mit einem Fahrzeug-sitz-Schutzbezug gemäß dem Stand der Technik.
- **Fig. 2**: zeigt schematisch in einer räumlichen Ansicht schräg von hinten eine Fahrzeugsitz-Einheit mit einem Fahrzeugsitz und einem erfindungsgemäßen FahrzeugsitzSchutzbezug.
- **Fig. 3 bis 5**: zeigen in rückseitigen Ansichten erfindungsgemäße Fahrzeugsitz-Schutzbezüge (in abgeflachtem oder gefaltetem Zustand).
- **Fig. 6**: zeigt den Fahrzeugsitz-Schutzbezug gemäß Fig. 5 in einem mittigen Längsschnitt VI.
- **Fig. 7**: zeigt in einer rückseitigen Ansicht einen weiteren erfindungsgemäßen Fahrzeugsitz-Schutzbezug (in abgeflachtem oder gefaltetem Zustand).

### FIGURENBESCHREIBUNG

In der vorliegenden Beschreibung beschreiben Angaben wie lateral, längs und quer Orte und Ausrichtungen des Fahrzeugsitzes, des Sitzpolsters oder der Rückenlehne in dem Fahrzeug sowie entsprechende Orte und Ausrichtungen des Fahrzeugsitz-Schutzbezuges, wenn dieser auf dem Fahrzeugsitz montiert ist.

Für die Beschreibung unterschiedlicher Ausführungsformen erfindungsgemäße Fahrzeugsitz-Schutzbezüge werden für die Kennzeichnung von Bauelementen oder Bestandteilen, welche hinsichtlich der Gestaltung und/oder Funktion einander entsprechen, dieselben Bezugszeichen verwendet. Sind in einer Ausführungsform Bauelemente oder Bestandteile mehrfach vorhanden, so ist in der vorliegenden Beschreibung teilweise dasselbe Bezugszeichen verwendet worden, wobei die unterschiedlichen Bauteile oder Bestandteile dann durch den ergänzenden Buchstaben a, b, ... unterschieden sind. Eine Bezugnahme auf ein Bezugszeichen ohne einen ergänzenden Buchstaben kann sich dann auch auf die Bauteile oder Bestandteile mit den ergänzenden Buchstaben beziehen.

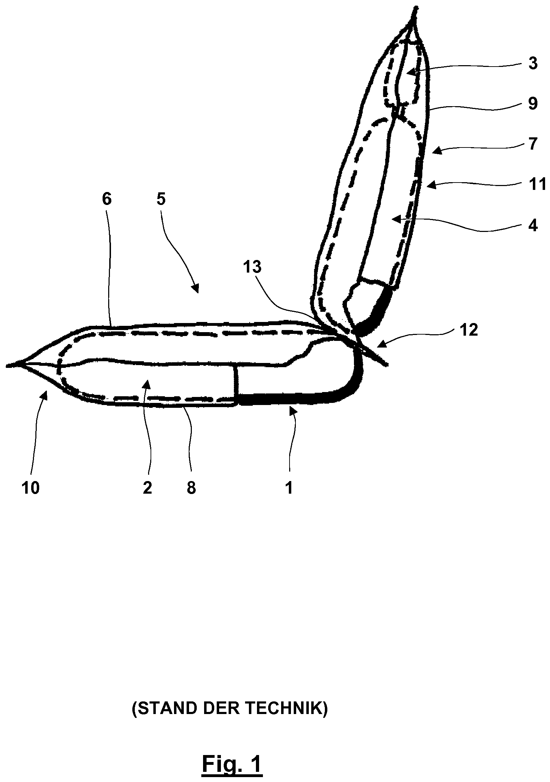

**Fig. 1** zeigt schematisch einen Fahrzeugsitz 1, der ein Sitzpolster 2 und eine eine Kopfstütze 3 aufweisende Rückenlehne 4 besitzt. Der Fahrzeugsitz 1 ist hierbei ohne den zugeordneten Unterbau dargestellt. Über den Fahrzeugsitz 1 ist ein Fahrzeugsitz-Schutzbezug 5 (hier gemäß dem Stand der Technik) gezogen. Von dem Fahrzeugsitz-Schutzbezug 5 abgedeckte Teilbereiche des Fahrzeugsitzes 1 sind in Fig. 1 gestrichelt dargestellt.

Der Fahrzeugsitz-Schutzbezug 5 verfügt über eine Vorderlage 6 und eine Rücklage 7, die mit zwei Rücklagenteilen 8, 9 gebildet ist. Die Vorderlage 6 und die Rücklage 7 sind im Bereich ihrer Ränder über Faltungen oder Schweißungen miteinander verbunden. Die Vorderlage 6 bildet mit dem Rücklagenteil 8 eine untere Tasche 10 und mit dem Rücklagenteil 9 eine obere Tasche 11. Die untere Tasche 10 ist von vorne über das Sitzpolster 2 gezogen, während die obere Tasche 11 von oben über die Rückenlehne 4 und deren Kopfstütze 3 gezogen ist. Überschüssiges Material der Vorderlage 6 bildet einen Einsteckbereich 12, der von vorne durch einen Spalt 13, der zwischen dem Sitzpolster 2 und der Rückenlehne 4 gebildet ist, durchgesteckt ist. Grenzen die Rückenlehne 4 und das Sitzpolster 2 unmittelbar aneinander an, kann infolge der Elastizitäten des Sitzpolsters 2 und der Rückenlehne 4 der Einsteckbereich 12 in dem Spalt 13 eingeklemmt sein.

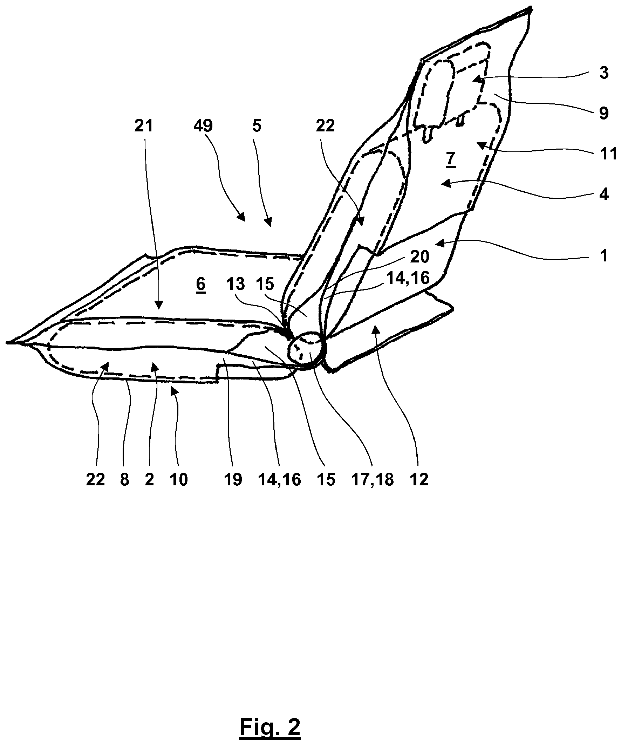

**Fig. 2** zeigt eine Fahrzeugsitz-Einheit 49, die aus einem Fahrzeugsitz 1 und einem erfindungsgemäßen Fahrzeugsitz-Schutzbezug 5 besteht. Hier sind abweichend zu der Ausführungsform gemäß Fig. 1 die Rücklagenteile 8, 9 über einen von der Rücklage 7 ausgebildeten Verbindungsstreifen 14 miteinander verbunden, der sich in Längsrichtung des Fahrzeugsitz-Schutzbezuges 5 erstreckt. Der Verbindungsstreifen 14 wird hierbei einstückig von der Rücklage 7, nämlich einstückig mit den Rücklagenteilen 8, 9 ausgebildet. Der Verbindungsstreifen 14 ist hier nicht unmittelbar mit der Vorderlage 6 verbunden. Vielmehr ist zwischen dem Verbindungsstreifen 14 und der Vorderlage 6 eine randgeschlossene Ausnehmung 15 gebildet. Auf diese Weise bildet der Verbindungsstreifen 14 eine Lasche 16. Die Lasche 16 begrenzt die randgeschlossene Ausnehmung 15. Die Lasche 16 besitzt keinen freien Endbereich. Vielmehr sind beide Endbereiche 19, 20 der Lasche 16 einstückig mit den Rücklagenteilen 8, 9 verbunden.

Der Fahrzeugsitz 1 weist im Bereich des Scharniers für die Verstellung der Neigung der Rückenlehne 4 einen Drehknopf 17 auf, der einen lateralen Vorsprung 18 des Fahrzeugsitzes 1 bildet. Die Lasche 16 ist (nach dem Überstülpen der Taschen 10, 11 über den Fahrzeugsitz 1) nach hinten gezogen worden und hinter den Vorsprung 18 gehängt bzw. um diesen geschlungen worden (mit einem Umschlingungswinkel von weniger als 360°, insbesondere im Bereich von 60° bis 120° oder 70° bis 110°). Auf diese Weise ist der Fahrzeugsitz-Schutzbezug 5 zusätzlich an dem Fahrzeugsitz 1 befestigt oder gesichert. Je nach Spannung der Lasche 16 und deren Elastizität kann über diese auch ein Spannen des Fahrzeugsitz-Schutzbezuges 5 erfolgen, mit welchem die obere Tasche 11 auf der Rückenlehne 4 nach unten gezogen wird und/oder die untere Tasche 10 auf dem Sitzpolster 2 nach hinten gezogen wird. Auch hier ist ein Einsteckbereich 2 durch den Spalt 13 zwischen dem Sitzpolster 2 und der Rückenlehne 4 hindurchgesteckt.

Für das Ausführungsbeispiel gemäß Fig. 2 ist die Lasche 16 von der Rücklage 7 ausgebildet und die randgeschlossene Ausnehmung 15 ist auf einer Seite von der Lasche 16 begrenzt, während diese auf der anderen Seite von dem lateralen Rand der Vorderlage 6 begrenzt ist. Eine entsprechende Lasche 16 ist auch auf der anderen lateralen Seite des Fahrzeugsitzes 1 angeordnet, sodass hier eine weitere Sicherung des Fahrzeugsitz-Schutzbezuges 5 an dem Fahrzeugsitz 1 erfolgt.

Die Lasche 16 ist in ihren beiden Endbereichen 19, 20 mit einer Seite 22 des Fahrzeugsitz-Schutzbezuges 5 verbunden (wobei wir eine abgewandelte Ausführungsform durchaus möglich ist, dass diese Verbindung im Bereich einer Vorderseite 21 des Fahrzeugsitzes-Schutzbezuges 5 erfolgt). Hierbei bezeichnet die Vorderseite 21 des Fahrzeugsitz-Schutzbezuges 5 den Teil des Fahrzeugsitz-Schutzbezuges 5, der in dem aufgezogenen Zustand auf der Vorderseite des Fahrzeugsitzes 1, also der Person zugewandt, angeordnet ist. Hingegen bezeichnet die Seite 22 des Fahrzeugsitz-Schutzbezuges 5 den Teil des Fahrzeugsitz-Schutzbezuges 5, der in dem aufgezogenen Zustand im lateralen Seitenbereich des Fahrzeugsitzes 1 angeordnet ist.

Für das dargestellte Ausführungsbeispiel sind die Endbereiche 19,20 integral mit Material der Vorderseite 21 oder Seite 22 verbunden. Für dieses (und auch andere Ausführungsbeispiele) wird unter einer "integralen Verbindung" eine Verbindung verstanden, die von der Materialbahn des in diesem Bereich des Fahrzeugsitz-Schutzbezuges 5 eingesetzten Materials selbst bereitgestellt wird, ohne dass zusätzliche Verbindungstechnologien wie ein Schweißen, Kleben, u. ä. eingesetzt sind. Abweichend zu dem dargestellten Ausführungsbeispiel kann aber auch nur einer der Endbereiche 19, 20 integral und der Vorderseite 21 oder Seite 22 ausgebildet sein, während der andere Endbereich dann über eine beliebige Verbindungstechnologien, insbesondere Schweißen, Kleben oder Knoten, mit der Vorderseite 21 oder Seite 22 verbunden ist.

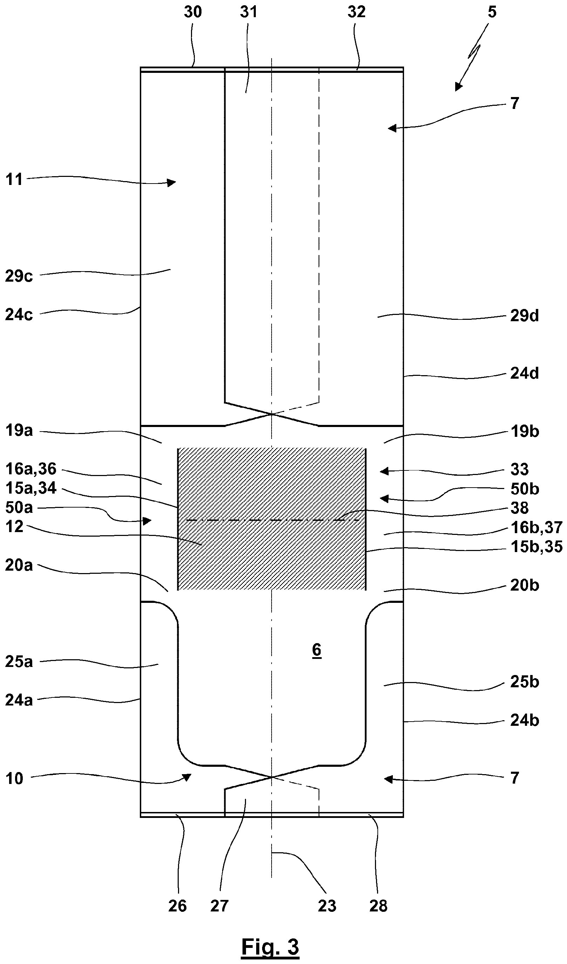

**Fig. 3** zeigt einen Fahrzeugsitz-Schutzbezug 5, der aus einer einstückigen Materialbahn, besondere einem Vlies, hergestellt ist. Seitenbereiche der Materialbahn sind zur Bildung der Rücklage 7 im Bereich von in Richtung einer Längsachse 23 orientierten Faltungen 24a, 24b, 24c, 24d gefaltet. Die seitlichen Ränder der Materialbahn sind hierbei zuvor so beschnitten worden, dass sich im Bereich der Faltungen 24a, 24b L-förmige untere Rücklagenteile 25a, 25b ergeben, wobei sich ein Schenkel des L jeweils entlang der Faltungen 24a, 24b erstreckt, während sich der andere Schenkel des L entlang des unteren Randes 26 des Fahrzeugsitz-Schutzbezuges 5 erstreckt. Hierbei erstrecken sich die letztgenannten Schenkel des L der Rücklagenteile 25a, 25b ungefähr über 2/3-tel der Erstreckung des unteren Randes 26 des Fahrzeugsitz-Schutzbezuges 5, sodass hier die Rücklagenteile 25a, 25b eine Überlappung 27 bilden. Im Bereich des unteren Randes 26 ist die Vorderlage 6 mit den Rücklagenteilen 25a, 25b über eine Verschweißung 28 verbunden, womit sich eine untere Tasche 10 ergibt. Hierbei erfolgt im Bereich der Überlappung 27 eine Verschweißung vom drei Lagen, nämlich der Vorderlage 6 mit den Rücklagenteilen 25a, 25b, während lateral abseits der Überlappung 27 eine Verschweißung von zwei Lagen erfolgt, nämlich der Vorderlage 6 mit dem Rücklagenteil 25a bzw. der Vorderlage 6 mit dem Rücklagenteil 25b. Die Ränder der Rücklagenteile 25a, 25b können wie dargestellt abgerundet sein. Zu erkennen ist in Fig. 3, dass die untere Tasche 10 im Querschnitt nicht randgeschlossen, sondern randoffen ist. Beim Überstülpen der unteren Tasche 10 über den Fahrzeugsitz 1 kann sich somit die untere Tasche 10 je nach Geometrie des Sitzpolsters 2 (nach vorne konisch zulaufend) öffnen.

Des Weiteren sind die Ränder der Materialbahn so beschnitten, dass sich im Bereich der Faltungen 24c, 24d rechteckige obere Rücklagenteile 29c, 29d (unter Umständen wie dargestellt jeweils mit einer abgeschrägten Ecke) ergeben. Hierbei entspricht die Breite der Rücklagenteile 29c, 29d ungefähr 2/3-tel der Erstreckung des oberen Randes 30 des Fahrzeugsitz-Schutzbezuges 5, so dass auch die Rücklagenteile 29c, 29d eine Überlappung 31 bilden. Im Bereich des oberen Randes 30 ist die Vorderlage 6 mit den Rücklagenteilen 29c, 29d über eine Verschweißung 32 verbunden, womit sich eine obere Tasche 11 ergibt. Hierbei erfolgt im Bereich der Überlappung 31 eine Verschweißung von 3 Lagen, nämlich der Vorderlage 6 mit den Rücklagenteilen 29c, 29d, während lateral abseits der Überlappung 31 eine Verschweißung von zwei Lagen erfolgt, nämlich der Vorderlage 6 mit dem Rücklagenteil 29c, bzw. der Vorderlage 6 mit dem Rücklagenteil 29d. Der Querschnitt der oberen Tasche 11 ist nicht randgeschlossen, sondern randoffen. Beim Überstülpen der oberen Tasche 11 über den Fahrzeugsitz 1 kann sich somit die obere Tasche 11 je nach Geometrie der Rückenlehne 4 (nach oben konisch zulaufend) öffnen.

Die Länge der oberen Tasche 11 entspricht vorzugsweise ungefähr der Länge der Rückenlehne 4 (ggf. einschl. einer Kopfstütze 3 der Rückenlehne) oder ist maximal 30 %, 20 % oder 10 % kleiner als diese. Die Länge der unteren Tasche 10 entspricht vorzugsweise ungefähr der Länge des Sitzpolsters 2 oder ist maximal 30 %, 20 % oder 10 % kleiner als diese.

Zwischen den Teilbereichen des Fahrzeugsitz-Schutzbezuges 5, die die Taschen 10, 11 ausbilden, ist ein Übergangsbereich 33 angeordnet. In dem Übergangsbereich 33 ist die Materialbahn so zugeschnitten, dass kein Rücklagenteil vorhanden ist. Somit wird der Übergangsbereich 33 ausschließlich von der Vorderlage 6 ausgebildet. Die laterale Erstreckung des Übergangsbereichs 33 entspricht hierbei dem Abstand der Faltungen 24a, 24b bzw. 24c, 24d.

Der Übergangsbereich 33 verfügt über Ausnehmungen 15a, 15b, die in Längsrichtung des Fahrzeugsitz-Schutzbezuges 5 und parallel zueinander orientiert sind. Die Ausnehmungen 15a, 15b sind randgeschlossen. Für das dargestellte Ausführungsbeispiel sind die Ausnehmungen 16a, 16b von zwei geradlinigen, in Längsrichtung orientierten Einschnitten 34, 35 gebildet.

Die Ausnehmungen 15a, 15b trennen den Übergangsbereich 33 in randseitig angeordnete Laschenbereiche 50 mit Laschen 16a, 16b sowie einen dazwischen angeordneten Einsteckbereich 12, welcher in den Figuren schraffiert dargestellt ist. Die Laschen 16a, 16b sind hier als Streifen 36, 37 mit konstanter Breite ausgebildet, bestehen aus dem Ausgangsmaterial oder der Materialbahn des Fahrzeugsitz-Schutzbezuges 5 und sind integraler Bestandteil der Vorderlage 6.

Für auf den Fahrzeugsitz 1 aufgezogenen Fahrzeugsitz-Schutzbezug 5 kann der Einsteckbereich 12 in Längsrichtung mittig entlang einer lateral orientierten Faltung 38 gefaltet werden, womit dann der gefaltete Einsteckbereich 12 in den Spalt 13 zwischen dem Sitzpolster 2 und der Rückenlehne 4 des Fahrzeugsitzes 1 eingeschoben werden kann. Die Laschen 16a, 16b können dann jeweils auf unterschiedlichen lateralen Seiten des Fahrzeugsitzes 1 um einen Vorsprung des Fahrzeugsitzes 1 geschlungen bzw. hinter diesen geführt werden.

Die Fertigung des Fahrzeugsitz-Schutzbezuges 5 erfolgt vorzugsweise mit einer kontinuierlichen Fertigung bei Anordnung des Fahrzeugsitz-Schutzbezuges 5 mit der Längsachse 23 in Längsrichtung der Materialbahn, welche der Förderrichtung in dem Fertigungsprozess entspricht.

Hinsichtlich weiterer Details, möglicher Geometrien der Ausführungsform gemäß Fig. 3 oder auch abgewandelten Ausführungsformen wird Bezug genommen auf die nicht vorveröffentlichte europäische Patentanmeldung EP 16 171 980.2, welche zum Gegenstand der vorliegenden Anmeldung gemacht wird.

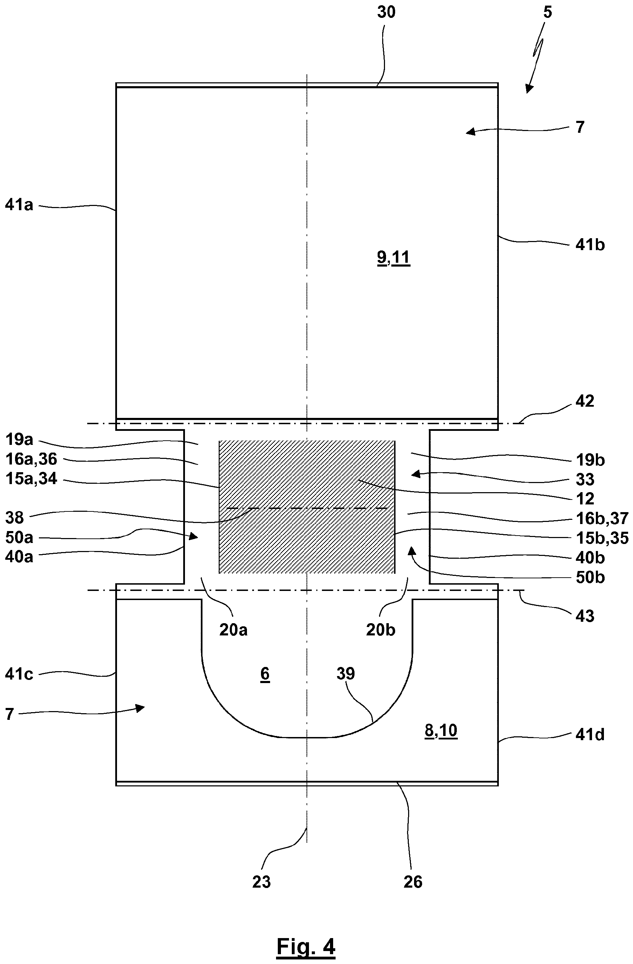

**Fig. 4** zeigt einen Fahrzeugsitz-Schutzbezug 5 mit einem durchgehenden Rücklagenteil 9, so dass hier die obere Tasche 11 randgeschlossen ausgebildet ist. Auch die untere Tasche 10 ist mit einem durchgehenden Rücklagenteil 8 gebildet. Allerdings verfügt hier das Rücklagenteil 8 über einen U-förmigen Ausschnitt 39, so dass in dem Bereich der Tasche 10 zwischen dem Ausschnitt 39 und dem unteren Rand 26 die Tasche 10 im Querschnitt randgeschlossen ist, während der Querschnitt der Tasche 10 im Bereich des Ausschnitts 39 randoffen ausgebildet ist.

Für das Ausführungsbeispiel gemäß Fig. 4 besitzt die Vorderlage 6 in dem Übergangsbereich 33 laterale Ausschnitte 40a, 40b, welche parallel zur Längsachse 23 verlaufen. Somit ist in dem Übergangsbereich 33 die Breite der Vorderlage 6 reduziert gegenüber der Breite der Vorderlage 6 im Öffnungsbereich der Taschen 10, 11. Hierbei korreliert die laterale Tiefe der Ausschnitte 39, 40 mit der Tiefe des Sitzpolsters 2 und der Rückenlehne 4 mit dem Ziel, dass die Laschen 16a, 16b ungefähr im lateralen Randbereich der Vorderseite des Sitzpolters 2 und der Rückenlehne 4 angeordnet sind.

Für den Fertigungsprozess eines Fahrzeugsitz-Schutzbezuges 5 gemäß Fig. 4 gibt es unterschiedliche Möglichkeiten. So ist beispielsweise möglich, dass der Fahrzeugsitz-Schutzbezug 5 aus einem in Richtung der Längsachse 23 verlaufenden Schlauch hergestellt ist. In diesem Fall sind die Ränder 26, 30 durch Schweißungen gebildet, während durch Schneiden insbesondere die Ausschnitte 39, 40a, 40b hergestellt werden. Bevorzugt erfolgt aber die Fertigung des Fahrzeugsitz-Schutzbezuges 5 gemäß Fig. 4 bei Anordnung desselben mit der Längsachse 23 quer zur Förderrichtung einer Materialbahn. In diesem Fall werden die Ränder 26, 30 von Faltungen von Seitenbereichen der Materialbahn gebildet, wobei dann die gefalteten Seitenbereiche über Schweißungen 41a, 41b, 41c, 41d mit der Vorderlage 6 verbunden sind.

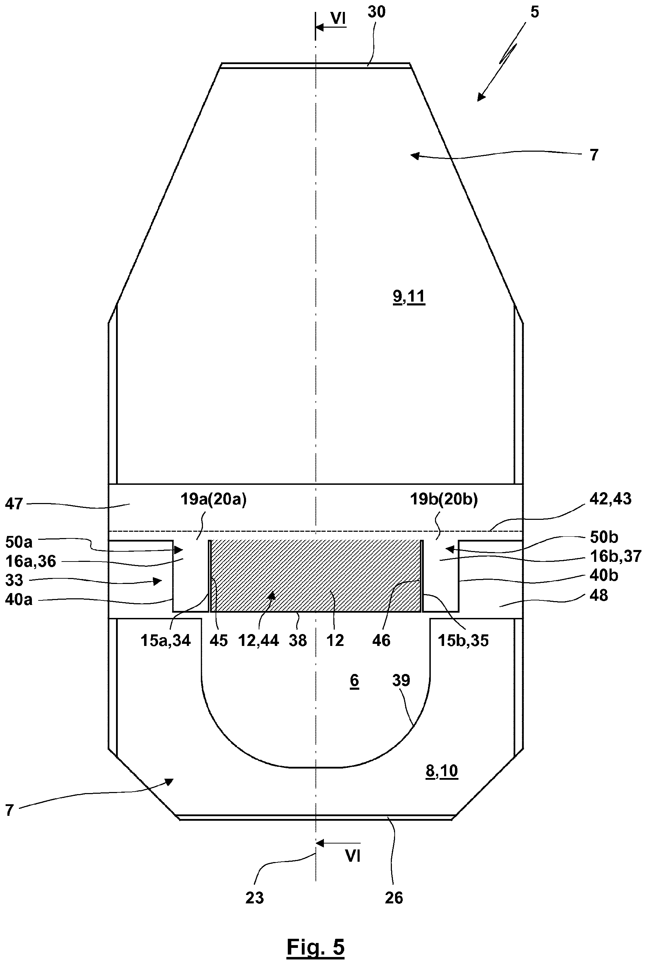

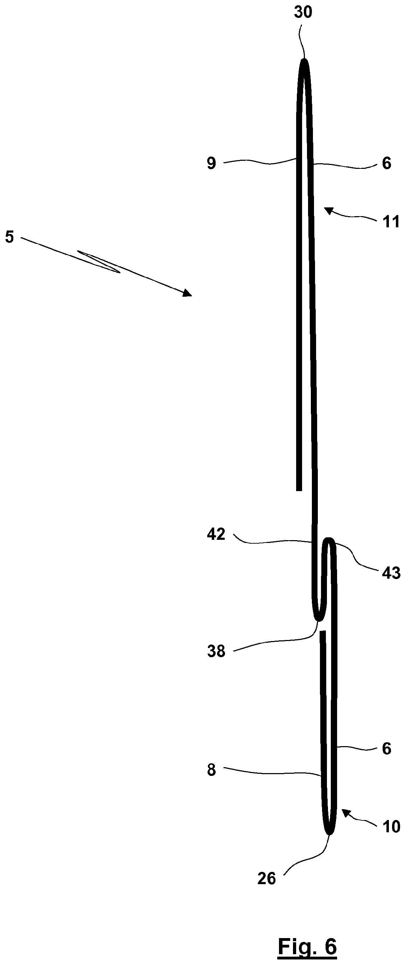

Grundsätzlich entspricht die Ausführungsform gemäß **Fig. 5** **und** **6** der Ausführungsform gemäß Fig. 4, wobei hier die beiden Taschen 10, 11 wie dargestellt abgeschrägt sind, womit eine Anpassung einerseits an die Geometrie des Sitzpolsters 2 und andererseits die Anpassung an eine Rückenlehne 4 mit Kopfstütze 3 erfolgen kann. Während des Herstellungsverfahrens des Fahrzeugsitz-Schutzbezuges 5 ist auch der Übergangsbereich 33 grundsätzlich gemäß der Ausführungsform gemäß Fig. 4 ausgebildet, so dass infolge von Ausschnitten 40a, 40b die laterale Erstreckung des Übergangsbereichs 33 kleiner ist als die laterale Erstreckung der Vorderlage. Während der Fertigung des Fahrzeugsitz-Schutzbezugs 5 wird der Übergangsbereich 33 aber im oberen Endbereich sowie unteren Endbereich des Übergangsbereichs 33 entlang Faltungen 42, 43 gefaltet (vgl. die Faltlinien in Fig. 4). Der Einsteckbereich 12 bildet dann, wie in Fig. 5 zu erkennen ist, eine Einstecktasche 44, welche optional durch in Richtung der Längsachse 23 verlaufende Schweißungen 45, 46 lateral geschlossen werden können. Möglich ist, dass die Faltungen 42, 43 durch die Schweißungen 45, 46 oder anderweitige Schweißungen stabilisiert sind. In Fig. 5 ist zu erkennen, dass zwischen der Faltung 42 und der oberen Tasche 11 einerseits und der Faltung 43 und der unteren Tasche 10 andererseits Materialstreifen 47, 48 oder Verlängerungen angeordnet sein können. Diese besitzen die Breite der Vorderlage 6, so dass auch in diesem Bereich eine vollständige Abdeckung des Fahrzeugsitzes 1 auf dessen Vorderseite gewährleistet ist.

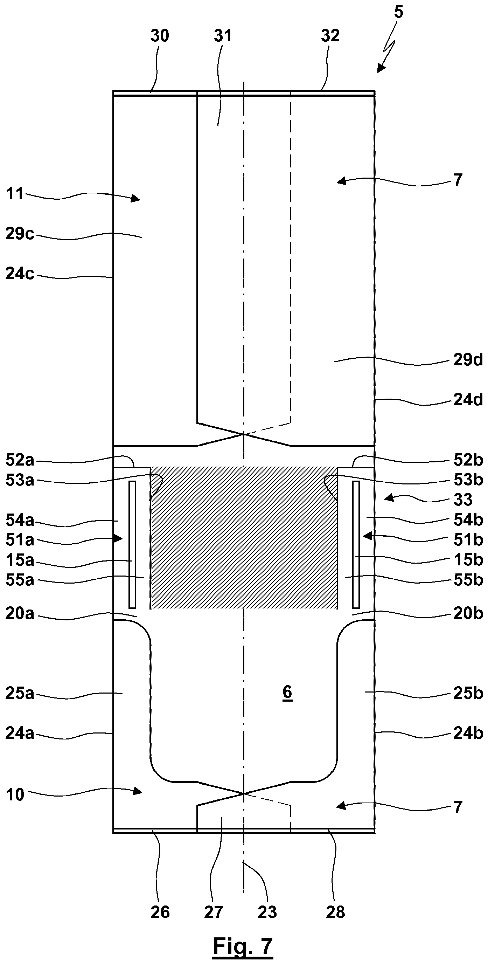

Für das Ausführungsbeispiel gemäß **Fig. 7** sind (bei ansonsten dem Ausführungsbeispiel gemäß Fig. 3 entsprechender Ausgestaltung) Streifen 51a, 51b mittels rechtwinklig zueinander, von dem äußeren Rand ausgehenden Einschnitten 52, 53 in dem Übergangsbereich 33 im lateralen Seitenbereich aus der Vorderlage 6 abgetrennt. Die Streifen 51 sind in Richtung der Längsachse 23 orientiert und (hier in dem der unteren Tasche 10 zugewandten Endbereich 20) integral mit der Vorderlage 6 im Bereich der Vorderseite 21 ausgebildet. In die Streifen 51 sind jeweils in Richtung der Längsachse 23 orientierte randgeschlossene Ausnehmungen 15 eingebracht, welche hier als rechteckige Ausschnitte ausgebildet sind (aber auch durchaus lediglich als Einschnitte ausgebildet sein können). Auf diese Weise bilden die Streifen 51 O-förmige Laschen 16, welche in den Endbereichen 20 integral mit der Vorderlage 6 im Bereich der Vorderseite 21 verbunden sind. Für dieses Ausführungsbeispiel können die Laschen 16 über den Vorsprung 18 des Fahrzeugsitzes 1 geschlungen werden, was hier vorzugsweise mit einem Umschlingungswinkel von 180° +/- 30° oder +/- 20° oder +/- 10° erfolgt. Somit werden in diesem Fall die Lasche 16 (abweichend zu den zuvor erläuterten Ausführungsbeispielen) nicht in "entfaltetem" Zustand eingesetzt. Vielmehr erstrecken sich die beiden Teilstreifen 54, 55 sowohl in dem Auslieferungszustand oder abgeflachten Zustand gemäß Fig. 7 als auch in dem montierten Zustand parallel zueinander und parallel zu der Längsachse 23. Erfolgt die Montage der Laschen 16 mit einer gewissen Spannung derselben, so üben die Laschen 16 eine Zugkraft auf die untere Tasche 10 aus, welche den Fahrzeugsitz-Schutzbezug 5 im Bereich der unteren Tasche 10 auf dem Fahrzeugsitz 1 sichert, während die Laschen 16 keine (oder allenfalls eine reduzierte) Sicherungswirkung hinsichtlich der oberen Tasche 11 hervorrufen.

Für das Ausführungsbeispiel gemäß Fig. 7 sind die Streifen 51 in dem Endbereich 20 mit den weiteren Teilbereichen des Fahrzeugsitz-Schutzbezuges 5 integral verbunden. Möglich ist aber auch, dass eine derartige Verbindung im Endbereich 19 erfolgt. Durchaus möglich ist des Weiteren, dass im Bereich der lateralen Ränder des Übergangsbereichs 33 jeweils zwei Streifen 51 vorhanden sind, von denen einer in dem Endbereich 20 und der andere in dem Endbereich 19 mit den weiteren Teilbereichen des Fahrzeugsitzes-Schutzbezuges 5 integral verbunden sind. Die beiden so gebildeten Laschen 16 können dann jeweils über den Vorsprung 18 geschlungen werden, wobei dann eine der Lasche zur Sicherung der oberen Tasche 11 dient, während die andere Lasche einer Sicherung der unteren Tasche 10 dient.

Die erfindungsgemäße Sicherung des Fahrzeugsitz-Schutzbezuges 5 an einem Fahrzeugsitz 1 ist auch dann einsetzbar, wenn der Spalt 13 zwischen dem Sitzpolster 2 und der Rückenlehne 4 nicht nach hinten durchgehend offen ist, sondern geschlossen ist, wie dies für einige Ausführungsformen von Fahrzeugsitzen 1 der Fall ist.

Sind die Laschen 16 über den Vorsprung 18 des Fahrzeugsitzes 1 gelegt oder um diesen geschlungen, ist der Fahrzeugsitz-Schutzbezug 5 formschlüssig gegen ein Abziehen des Fahrzeugsitz-Schutzbezuges 5 nach vorne gesichert, so dass die Entfernung des Fahrzeugsitz-Schutzbezuges 5 ohne Beseitigung der Teilumschlingung nur durch Zerreißen der Laschen 16 möglich ist.

Vorzugsweise sind die Ausnehmungen 15 bzw. Einschnitte 34, 35 durch Stanzen, Schneiden mittels eines Messers oder eines Lasers hergestellt.

Bezeichnet B die Breite des Sitzpolsters 2 und der Rückenlehne 4 im Übergangsbereich zu dem Spalt 13, beträgt der mittlere Abstand der beiden Laschen 16a, 16b ungefähr 0,8 x B bis 1,2 x B, vorzugsweise 0,9 x B bis 1,1 x B.

Der Grundgedanke der Erzeugung der Laschen 16 mittels einer randgeschlossenen Ausnehmung 15 und der Art der Befestigung des Fahrzeugsitz-Schutzbezuges 5 an einem Fahrzeugsitz 1 ist im Rahmen der Erfindung auch auf die ansonsten aus dem Stand der Technik bekannten Fahrzeugsitz-Schutzbezüge 5 übertragbar, insbesondere Fahrzeugsitz-Schutzbezüge 5 gemäß dem eingangs genannten Stand der Technik. Um lediglich einige, nicht beschränkende Beispiele zu nennen, kann erfindungsgemäß eine Integration der Erfindung auch in folgende Ausgestaltungen erfolgen:
- Der Fahrzeugsitz-Schutzbezug 5 kann auch einen integrierten Schutzbezugteil für einen Fußraum des Kraftfahrzeuges aufweisen, vgl. DE 10 2007 029 692 B4;
- Der Fahrzeugsitz-Schutzbezug 5 kann zumindest teilweise aus einer elastischen rückstellfähigen Kunststofffolie hergestellt sein.
- Einsatz finden kann die erfindungsgemäße Ausgestaltung auch für einen Fahrzeugsitz-Schutzbezug 5, wie dieser in der nicht vorveröffentlichten Patentanmeldung EP 16 171 980.2, EP 16 155 462.1 oder dem erteilten Patent EP 2 913 224 B1 dargestellt und beschrieben ist.

Vorzugsweise besteht der Fahrzeugsitz-Schutzbezug 5 aus einer einzigen Materialbahn (schlauchartig, eben oder gefaltet), wobei die einzelnen Teilbereiche des Fahrzeugsitz-Schutzbezuges 5 und/oder die mindestens eine Lasche 16 mit dem restlichen Teil des Fahrzeugsitz-Schutzbezuges 5 über die ursprüngliche Materialbahn (vorzugsweise ohne weitere Befestigungsmaßnahmen) miteinander verbunden sind oder "zusammenhängen". Bei dieser Materialbahn handelt es sich vorzugsweise um ein Vlies. Möglich ist aber auch, dass der Fahrzeugsitz-Schutzbezug 5 vollständig oder teilweise aus einer Folie und/oder einem Stoff besteht.

Die dargestellten Ausführungsformen verfügen sämtlich über einen Einsteckbereich 12. Durchaus möglich ist aber auch, dass der erfindungsgemäße Fahrzeugsitz-Schutzbezug 5 ohne einen derartigen Einsteckbereich 12 ausgebildet ist.

Möglich ist, dass der Fahrzeugsitz-Schutzbezug 5 einen Aufdruck oder Aufkleber oder eine anderweitige Kennzeichnung mit Hinweisen für die Nutzung des Fahrzeugsitz-Schutzbezuges 5 besitzt. Diese Hinweise können bspw. in
- einer Kennzeichnung der einzelnen unterschiedlichen funktionalen Bereiche des Fahrzeugsitz-Schutzbezuges 5,
- einer Kennzeichnung, mit welchem Teil des Fahrzeugsitzes der jeweilige Bereich des Fahrzeugsitz-Schutzbezuges 5 in Wirkverbindung gebracht werden soll, und/oder
- einer Bedienungsanleitung
bestehen.

Möglich ist, dass einerseits die Erzeugung der mindestens einen Ausnehmung 15 und andererseits ein Zuschneiden der Materialbahn zur Bildung des Fahrzeugsitz-Schutzbezuges 5 in einem einzigen Arbeitsschritt, insbesondere einem Schneiden oder Stanzen mit einem einzigen Stanzwerkzeug, erfolgt.

Für die dargestellten Ausführungsbeispiele sind die randgeschlossenen Ausnehmungen 15 von geradlinigen Einschnitten oder Ausstanzungen oder einem rechteckigen Ausschnitt gebildet oder begrenzt. Durchaus möglich ist aber, dass die randgeschlossene Ausnehmung 15 von einem beliebig konturierten Einschnitt, einer beliebig konturierten Ausstanzung oder einem beliebig geformten Ausschnitt gebildet ist. Möglicherweise können überhängende Materialbereiche, beispielsweise eine sich ergebende Zunge im Fall einer C-förmigen Ausstanzung, genutzt werden, um nach dem Umschlingen des Vorsprungs 18 Teile des Vorsprungs 18 oder des Fahrzeugsitzes 1 oder von dessen Unterkonstruktion abzudecken.

Der Fahrzeugsitz-Schutzbezug 5 und/oder die Lasche 16 können mit einer Dehnbarkeit ausgestattet sein. Hierbei ermöglicht eine plastische Dehnbarkeit eine Anpassung der Geometrie der Ausnehmung 15 und der Lasche 16 an die Geometrie des Fahrzeugsitzes 1. Eine derartige Anpassbarkeit kann auch durch eine elastische Dehnbarkeit gewährleistet werden, wobei diese dann zusätzlich eine Erzeugung einer Spannkraft gewährleisten kann, welche einen straffen Sitz des Fahrzeugsitz-Schutzbezuges 5 auf dem Fahrzeugsitz 1 und/oder eine Sicherung der unteren Tasche 10 auf dem Sitzpolster 2 oder der oberen Tasche 11 auf der Rückenlehne 4 gewährleistet.

Eine integrale Verbindung der Laschen 16 mit den benachbarten Teilbereichen des Fahrzeugsitz-Schutzbezuges 5 erfolgt in einem der Endbereiche 19, 20. Vorzugsweise erfolgt diese Verbindung im beiden Endbereichen 19, 20.

Möglich ist hierbei, dass ein Endbereich 19 benachbart der unteren Tasche 10 integral mit dem benachbarten Teilbereich des Fahrzeugsitz-Schutzbezuges 5 verbunden ist, während der andere Endbereich 20 benachbart der oberen Tasche 11 mit dem benachbarten Teilbereich des Fahrzeugsitz-Schutzbezuges 5 verbunden ist (vgl. Ausführungsbeispiele gemäß Fig. 2 bis 6). In diesem Fall kann sich die Lasche 16 in einem abgeflachten, ebenen Zustand des Fahrzeugsitz-Schutzbezuges 5 geradlinig und parallel zur Längsachse 23 erstrecken. Ebenfalls möglich ist aber auch, dass beide Endbereiche 19, 20 entweder benachbart der oberen Tasche 11 oder benachbart der unteren Tasche 10 mit dem benachbarten Teilbereich des Fahrzeugsitz-Schutzbezuges 5 verbunden sind (vgl. Ausführungsbeispiel gemäß Fig. 7). In diesem Fall kann sich die Lasche 16 in einem abgeflachten, ebenen Zustand des Fahrzeugsitz-Schutzbezuges 5 mit den beiden Teilstreifen 54, 55 U-förmig erstrecken, wobei die beiden Teilstreifen von 54, 55 parallel zur Längsachse 23 orientiert sind.

### BEZUGSZEICHENLISTE

- 1: Fahrzeugsitz
- 2: Sitzpolster
- 3: Kopfstütze
- 4: Rückenlehne
- 5: Fahrzeugsitz-Schutzbezug
- 6: Vorderlage
- 7: Rücklage
- 8: Rücklagenteil
- 9: Rücklagenteil
- 10: untere Tasche
- 11: obere Tasche
- 12: Einsteckbereich
- 13: Spalt
- 14: Verbindungsstreifen
- 15: Ausnehmung
- 16: Lasche
- 17: Drehknopf
- 18: Vorsprung
- 19: Endbereich
- 20: Endbereich
- 21: Vorderseite
- 22: Seite
- 23: Längsachse
- 24: Faltung
- 25: unteres Rücklagenteil
- 26: unterer Rand
- 27: Überlappung
- 28: Schweißung
- 29: Rücklagenteil
- 30: oberer Rand
- 31: Überlappung
- 32: Schweißung
- 33: Übergangsbereich
- 34: Einschnitt
- 35: Einschnitt
- 36: Streifen
- 37: Streifen
- 38: Faltung
- 39: Ausschnitt
- 40: Ausschnitt
- 41: Schweißung
- 42: Faltung
- 43: Faltung
- 44: Einstecktasche
- 45: Schweißung
- 46: Schweißung
- 47: Materialstreifen
- 48: Materialstreifen
- 49: Fahrzeugsitz-Einheit
- 50: Laschenbereich
- 51: Streifen
- 52: Einschnitt
- 53: Einschnitt
- 54: Teilstreifen
- 55: Teilstreifen

## Patentansprüche

1. Fahrzeugsitz-Schutzbezug (5) mit
a) einer Vorderlage (6),
b) einer Rücklage (7) und
c) einer oberen Tasche (11) und/oder einer unteren Tasche (10), die von der Vorderlage (6) und der Rücklage (7) gebildet sind/ist,
d) wobei die Vorderlage (6) und die Rücklage (7) im Bereich ihrer Ränder über Faltungen oder Schweißungen miteinander verbunden sind und
e) der Fahrzeugsitz-Schutzbezug (5) zumindest teilweise aus einer Kunststofffolie und/oder zumindest teilweise aus einem Vlies hergestellt ist,
**dadurch gekennzeichnet, dass**
f) die Vorderlage (6) und/oder Rücklage (7) eine randgeschlossene Ausnehmung (15) oder eine Perforation für eine randgeschlossene Ausnehmung aufweisen/aufweist, die von einer Lasche (16) begrenzt ist, die einstückig von der Vorderlage (6) und/oder der Rücklage (7) ausgebildet ist und zur Fixierung des Fahrzeugsitz-Schutzbezuges (5) auf dem Fahrzeugsitz (1) bei Erstreckung auf einer lateralen Seite des Fahrzeugsitzes um einen Vorsprung (18) des Fahrzeugsitzes (1) geschlungen werden kann, und
g) die randgeschlossene Ausnehmung (15)
ga) als Einschnitt ausgebildet ist, so dass die die Ausnehmung begrenzenden Materialbereiche der Fahrzeugsitz-Schutzfolie unmittelbar aneinander angrenzen,
gb) als eine Art Ausschnitt ausgebildet ist, so dass die die Ausnehmung begrenzenden Materialbereiche zumindest in einem Teilbereich der Ausnehmung nicht unmittelbar aneinander angrenzen, sondern voneinander beabstandet sind, oder
gc) von einer Perforation gebildet ist, so dass das Freilegen der randgeschlossenen Ausnehmung erst durch Durchtrennung der Perforation erfolgt.

2. Fahrzeugsitz-Schutzbezug (5) nach Anspruch 1, **dadurch gekennzeichnet, dass** die Vorderlage (6) und/oder die Rücklage (7) einen Übergangsbereich (33) ausbilden, wobei die Lasche (16) und/oder die randgeschlossene Ausnehmung (15) oder die Perforation für eine randgeschlossene Ausnehmung im lateralen Seitenbereich des Übergangsbereichs (33) angeordnet sind/ist.

3. Fahrzeugsitz-Schutzbezug (5) nach Anspruch 2, **dadurch gekennzeichnet, dass** der Übergangsbereich (33) ausschließlich von der Vorderlage (6) ausgebildet ist.

4. Fahrzeugsitz-Schutzbezug (5) nach Anspruch 3, **dadurch gekennzeichnet, dass** die laterale Erstreckung des Übergangsbereichs (33) kleiner ist als die laterale Erstreckung der Vorderlage (6) im Bereich der oberen Tasche (11) und/oder unteren Tasche (10).

5. Fahrzeugsitz-Schutzbezug (5) nach einem der Ansprüche 2 bis 4, **dadurch gekennzeichnet, dass** die Länge der Vorderlage (6) zumindest der Summe der Längen des Sitzpolsters (2), der Rückenlehne (4) und des Übergangsbereichs (33) entspricht, wobei der Übergangsbereich (33)
a) einen Einsteckbereich (12) zur Bildung einer Einstecktasche (44) ausbildet, die in einen Spalt (13) zwischen dem Sitzpolster (2) und der Rückenlehne (4) des Fahrzeugsitzes (1) einsteckbar ist, und/oder
b) mindestens einen Laschenbereich (50) zur Bildung der mindestens einen Lasche (16) ausbildet.

6. Fahrzeugsitz-Schutzbezug (5) nach Anspruch 5, **dadurch gekennzeichnet, dass** die Einstecktasche (44) lateral zumindest teilweise durch eine Schweißung (45, 46) geschlossen ist.

7. Fahrzeugsitz-Schutzbezug (5) nach einem der vorhergehenden Ansprüche, **dadurch gekennzeichnet, dass** zwei Laschen (16a, 16b) vorhanden sind.

8. Fahrzeugsitz-Schutzbezug (5) nach Anspruch 7, **dadurch gekennzeichnet, dass** der laterale Abstand der Laschen (16a, 16b) ungefähr der lateralen Erstreckung des Fahrzeugsitzes (1) entspricht.

9. Fahrzeugsitz-Einheit (49) mit
a) einem Fahrzeugsitz (1) und
b) einem den Fahrzeugsitz (1) schützenden Fahrzeugsitz-Schutzbezug (5) mit
ba) einer Vorderlage (6),
bb) einer Rücklage (7) und
bc) einer oberen Tasche (11) und/oder unteren Tasche (10), die von der Vorderlage (6) und der Rücklage (7) gebildet sind/ist,
c) wobei die Vorderlage (6) und die Rücklage (7) im Bereich ihrer Ränder über Faltungen oder Schweißungen miteinander verbunden sind und
d) der Fahrzeugsitz-Schutzbezug (5) zumindest teilweise aus einer Kunststofffolie und/oder zumindest teilweise aus einem Vlies hergestellt ist,
**dadurch gekennzeichnet, dass**
e) der Fahrzeugsitz-Schutzbezug (5) eine einstückig von der Vorderlage (6) und/oder von der Rücklage (7) ausgebildete Lasche (16) aufweist, die
ea) sich auf einer lateralen Seite des Fahrzeugsitzes (1) von der Vorderseite (21) oder einer Seite (22) des Fahrzeugsitzes-Schutzbezuges (5) um einen Vorsprung (18) des Fahrzeugsitzes (1) zurück zu der Vorderseite (21) oder Seite (22) des Fahrzeugsitz-Schutzbezuges (5) erstreckt und
eb) in beiden Endbereichen (19, 20) auf derselben lateralen Seite des Fahrzeugsitzes (1) mit der Vorderseite (21) oder Seite (22) des Fahrzeugsitz-Schutzbezuges (5) verbunden ist, und
f) die Lasche (16) in einem Endbereich (19; 20) integral von der Vorderseite (21) oder Seite (22) des Fahrzeugsitz-Schutzbezuges (5) ausgebildet ist und in dem anderen Endbereich mit der Vorderseite (21) oder Seite (22) des Fahrzeugsitz-Schutzbezuges (5) verschweißt, verklebt oder verknotet ist oder der Fahrzeugsitz-Schutzbezug (5) nach einem der Ansprüche 1 bis 8 ausgebildet ist.

10. Verfahren zur Verwendung eines Fahrzeugsitz-Schutzbezuges (5) nach einem der Ansprüche 1 bis 8, **gekennzeichnet durch folgende Verfahrensschritte:**
a) Überstülpen der oberen Tasche (11) des Fahrzeugsitz-Schutzbezuges (5) über eine Rückenlehne (4) eines Fahrzeugsitzes (1) und/oder Überstülpen der unteren Tasche (10) des Fahrzeugsitz-Schutzbezuges (5) über ein Sitzpolster (2) eines Fahrzeugsitzes (1),
b) Umschlingen eines Vorsprungs (18) des Fahrzeugsitzes (5) mit der Lasche (16) des Fahrzeugsitz-Schutzbezuges (5), um den Fahrzeugsitz-Schutzbezug (5) an dem Fahrzeugsitz (1) zu fixieren.

11. Verfahren nach Anspruch 10, **dadurch gekennzeichnet, dass** eine Einstecktasche (44) in einen Spalt (13) zwischen der Rückenlehne (4) und dem Sitzpolster (2) eingesteckt wird.

## Claims

1. Vehicle seat protective cover (5) comprising
a) a front sheet (6),
b) a rear sheet (7) and
c) an upper pocket (11) and/or a lower pocket (10) being formed by the front sheet (6) and the rear sheet (7),
d) the front sheet (6) and the rear sheet (7) being connected to each other by foldings or weldings in the region of their edges and
e) the vehicle seat protective cover (5) being at least partially manufactured from a plastic sheet and/or a non-woven material,
**characterised in that**
f) the front sheet (6) and/or the rear sheet (7) comprises a recess (15) having a closed edge or a perforation for a recess having a closed edge, the recess being limited by a strap (16) which is formed integrally by the front sheet (6) and/or the rear sheet (7) and which can be passed around or along a protrusion (18) of the vehicle seat (1) when extending on a lateral side of the vehicle seat for fixing the vehicle seat protective cover (5) on the vehicle seat (1), and
g) the recess (15) having a closed edge
ga) is embodied as a cutting so that material regions of the vehicle seat protective cover limiting the recess directly adjoin each other,
gb) is a kind of cut-out so that the material regions delimiting the recess at least in a subsection of the recess do not directly adjoin each other but have a distance from each other or
gc) is formed by a perforation so that the recess having the closed edge is exposed when severing the perforation.

2. Vehicle seat protective cover (5) of claim 1, **characterised in that** the front sheet (6) and/or the rear sheet (7) comprise a transition region (33), the strap (16) and/or the recess (15) having the closed edge or the perforation for the recess having the closed edge are arranged in a lateral side region of the transition region (33).

3. Vehicle seat protective cover (5) of claim 2, **characterised in that** the transition region (33) is exclusively formed by the front sheet (6).

4. Vehicle seat protective cover (5) of claim 3, **characterised in that** the lateral extension of the transition region (33) is smaller than the lateral extension of front sheet (6) in the region of the upper pocket (11) and/or the lower pocket (10).

5. Vehicle seat protective cover (5) of one of claims 2 to 4, **characterised in that** the length of the front sheet (6) is at least the same as the sum of the lengths of the seat cushion (2), the backrest (4) and the transition region (33), the transition region (33)
a) forming an insertion region (12) for the formation of an insertion pocket (44) which can be inserted into a gap (13) between the seat cushion (2) and the backrest (4) of the vehicle seat (1) and/or
b) forms at least a strap section (50) for forming the at least one strap (16).

6. Vehicle seat protective cover (5) of claim 5, **characterised in that** the insertion pocket (44) is at least partially closed in lateral direction by a welding (45, 46).

7. Vehicle seat protective cover (5) of one of the preceding claims, **characterised in that** two straps (16a, 16b) are provided.

8. Vehicle seat protective cover (5) of claim 7, **characterised in that** the lateral distance of the straps (16a, 16b) corresponds approximately to the lateral extension of the vehicle seat (1).

9. Vehicle seat unit (49) comprising
a) a vehicle seat (1) and
b) a vehicle seat protective cover (5) protecting the vehicle seat (1), the vehicle seat protective cover (5) comprising
ba) a front sheet (6),
bb) a rear sheet (7) and
bc) an upper pocket (11) and/or a lower pocket (10) being formed by the front sheet (6) and the rear sheet (7),
c) the front sheet (6) and the rear sheet (7) being connected to each other in the region of their edges by foldings or weldings and
d) the vehicle seat protective cover (5) being at least partially manufactured from a plastic film and/or a non-woven material,
**characterised in that**
e) the vehicle seat protective cover (5) comprises a strap (16) which is integrally formed by the front sheet (6) and/or the rear sheet (7) and which
ea) extends on a lateral side of the vehicle seat (1) from the front side (21) or one side (22) of the vehicle seat protective cover (5) along or around a protrusion (18) of the vehicle seat (1) back to the front side (21) or side (22) of the vehicle seat protective cover (5) and
eb) is connected in both end regions (19, 20) on the same lateral side of the vehicle seat (1) to the front side (21) or side (22) of the vehicle seat protective cover (5) and
f) in one end region (19; 20) the strap (16) is formed integrally by the front side (21) or side (22) of the vehicle seat protective cover (5) and another end region the strap (16) is welded, adhered or knotted to the front side (21) or side (22) of the vehicle seat protective cover (5) or the vehicle seat protective cover (5) is a vehicle seat protective cover (5) of one of claims 1 to 8.

10. Method for using a vehicle seat protective cover (5) of one of claims 1 to 8, **characterised by the following method steps:**
a) imposing the upper pocket (11) of the vehicle seat protective cover (5) on a backrest (4) of a vehicle seat (1) and/or imposing the lower pocket (10) of the vehicle seat protective cover (5) on a seat cushion (2) of a vehicle seat (1),
b) passing or winding the strap (16) of the vehicle seat protective cover (5) along or about a protrusion (18) of the vehicle seat (5) for fixing the vehicle seat protective cover (5) at the vehicle seat (1).

11. Method of claim 10, **characterised in that** an insertion pocket (44) is inserted into a gap (13) between the backrest (4) and the seat cushion (2).

## Revendications

1. Housse de protection de siège de véhicule (5) avec
a) une couche avant (6),
b) une couche arrière (7) et
c) une poche supérieure (11) et/ou une poche inférieure (10), qui sont/est constituée(s) par la couche avant (6) et la couche arrière (7),
d) dans laquelle la couche avant (6) et la couche arrière (7) sont reliées entre elles au niveau de leurs bords par des pliages ou des soudures et
e) la housse de protection de siège de véhicule (5) est constituée au moins partiellement d'un film de matière plastique et/ou au moins partiellement d'un matériau non tissé,
**caractérisé en ce que**
f) la couche avant (6) et/ou la couche arrière (7) comprennent/comprend un évidement fermé sur les bords (15) ou une perforation pour un évidement fermé sur les bords, qui est délimité par une patte (16) réalisée d'une seule pièce par la couche avant (6) et/ou la couche arrière (7) et qui peut être passée, pour la fixation de la housse de protection de siège de véhicule (5) sur le siège de véhicule (1) lors d'une extension sur un côté latéral du siège de véhicule, autour d'une saillie (18) du siège de véhicule (1) et
g) l'évidement fermé sur les bords (15)
ga) est réalisé comme une incision, de façon à ce que les zones de matériaux du film protecteur du siège de véhicule limitant l'évidement soient immédiatement adjacentes entre elles,
gb) est réalisé comme une sorte de découpe, de façon à ce que les zones de matériaux limitant l'évidement ne soient pas immédiatement adjacentes entre elles, mais sont distantes entre elles, au moins dans une partie de l'évidement ou
gc) est constituée d'une perforation, de façon à ce que la libération de l'évidement formé sur les bords n'ait lieu que par le découpage de la perforation.

2. Housse de protection de siège de véhicule (5) selon la revendication 1, **caractérisée en ce que** la couche avant (6) et/ou la couche arrière (7) forment une zone de transition (33), dans laquelle la patte (16) et/ou l'évidement fermé sur les bords (15) ou la perforation pour un évidement fermé sur les bords sont/est disposé(es) dans la partie latérale de la zone de transition (33).

3. Housse de protection de siège de véhicule (5) selon la revendication 2, **caractérisée en ce que** la zone de transition (33) est constituée exclusivement de la couche avant (6).

4. Housse de protection de siège de véhicule (5) selon la revendication 3, **caractérisée en ce que** l'extension latérale de la zone de transition (33) est inférieure à l'extension latérale de la couche avant (6) au niveau de la poche supérieure (11) et/ou de la poche inférieure (10).

5. Housse de protection de siège de véhicule (5) selon l'une des revendications 2 à 4, **caractérisée en ce que** la longueur de la couche avant (6) correspond au moins à la somme des longueurs de la garniture de siège (2), du dossier (4) et de la zone de transition (33), dans laquelle la zone de transition (33)
a) forme une zone d'insertion (12) pour la formation d'une poche d'insertion (44), qui peut être insérée dans un interstice (13) entre la garniture de siège (2) et le dossier (4) du siège de véhicule (1) et/ou
b) forme au moins une zone de patte (50) pour la formation de l'au moins une patte (16).

6. Housse de protection de siège de véhicule (5) selon la revendication 5, **caractérisée en ce que** la poche d'insertion (44) est fermée latéralement au moins partiellement à l'aide d'une soudure (45, 46).

7. Housse de protection de siège de véhicule (5) selon l'une des revendications précédentes, **caractérisée en ce que** deux pattes (16a, 16b) sont prévues.

8. Housse de protection de siège de véhicule (5) selon la revendication 7, **caractérisée en ce que** la distance latérale entre les pattes (16a, 16b) correspond approximativement à l'extension latérale du siège de véhicule (1).

9. Unité de siège de véhicule (49) avec
a) un siège de véhicule (1) et
b) une housse de protection de siège de véhicule (5) protégeant le siège de véhicule (1), avec
ba) une couche avant (6),
bb) une couche arrière (7) et
bc) une poche supérieure (11) et/ou une poche inférieure (10), qui sont/est constituée(s) par la couche avant (6) et la couche arrière (7),
c) dans laquelle la couche avant (6) et la couche arrière (7) sont reliées entre elles au niveau de leurs bords par des plis ou des soudures et
d) la housse de protection de siège de véhicule (5) est constituée au moins partiellement d'un film de matière plastique et/ou au moins partiellement d'un matériau non tissé,
**caractérisée en ce que**
e) la housse de protection de siège de véhicule (5) comprend une patte (16) constituée d'une seule pièce par la couche avant (6) et/ou la couche arrière (7), qui
ea) s'étend sur un côté latéral du siège de véhicule (1), à partir du côté avant (21) et/ou d'un côté (22) de la housse de protection de siège de véhicule (5), autour d'une saillie (18) du siège de véhicule (1), à nouveau vers le côté avant (21) ou le côté (22) de la housse de protection de siège de véhicule (5) et
eb) est reliée, dans les deux zones d'extrémité (19, 20), sur le même côté latéral du siège de véhicule (1), avec le côté avant (21) ou le côté (22) de la housse de protection de siège de véhicule (5) et
f) la patte (16) est constituée, dans une zone d'extrémité (19 ; 20), d'une seule pièce par le côté avant (21) ou le côté (22) de la housse de protection de siège de véhicule (5) et, dans une autre zone d'extrémité, est soudée, collée ou nouée avec le côté avant (21) ou le côté (22) de la housse de protection de siège de véhicule (5) ou la housse de protection de siège de véhicule (5) est conçue selon l'une des revendications 1 à 8.

10. Procédé pour l'utilisation d'une housse de protection de siège de véhicule (5) selon l'une des revendications 1 à 8, **caractérisée par** les étapes suivantes :
a) enfilage de la poche supérieure (11) de la housse de protection de siège de véhicule (5) sur un dossier (4) d'un siège de véhicule (1) et/ou enfilage de la poche inférieure (10) de la housse de protection de siège de véhicule (5) sur une garniture de siège (2) d'un siège de véhicule (1),
b) enveloppement d'une saillie (18) du siège de véhicule (5) avec la patte (16) de la housse de protection de siège de véhicule (5), afin de fixer la housse de protection de siège de véhicule (5) au siège de véhicule (1).

11. Procédé selon la revendication 10, **caractérisé en ce qu'**une poche d'insertion (44) est insérée dans un interstice (13) entre le dossier (4) et la garniture de siège (2).
